# EUROPEAN PATENT SPECIFICATION

(11) **EP 4 258 462 B1**
(45) Date of publication and mention of the grant of the patent: **28.10.2026**
(21) Application number: 22876863.6
(22) Date of filing: 28.09.2022
(51) Int. Cl.: H01M 50/593, H01M 50/586, H01M 10/04, H01M 50/249, H01M 50/548

(54) **CYLINDRICAL BATTERY CELL, BATTERY PACK AND VEHICLE INCLUDING THE SAME, AND METHOD FOR MANUFACTURING THE SAME**
ZYLINDRISCHE BATTERIEZELLE, BATTERIEPACK UND FAHRZEUG DAMIT SOWIE VERFAHREN ZUR HERSTELLUNG
ÉLÉMENT DE BATTERIE CYLINDRIQUE, BLOC-BATTERIE ET VÉHICULE LE COMPRENANT, ET PROCÉDÉ DE PRODUCTION

(30) Priority: 30.09.2021 KR 20210130391; 07.01.2022 KR 20220002904; 19.07.2022 KR 20220089233
(43) Date of publication of application: 11.10.2023
(60) Divisional application: 26200985.5 / 4 822 883
(73) Proprietor: LG Energy Solution, Ltd., Seoul 07335 (KR)
(72) Inventor: JO, Min-Ki, Daejeon 34122 (KR); KANG, Bo-Hyun, Daejeon 34122 (KR); KIM, Do-Gyun, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2022/014595
(87) International publication number: WO 2023/055091

(56) References cited:
- EP-A1- 4 340 099
- CN-U- 205 670 567
- CN-U- 206 461 019
- CN-Y- 201 066 701
- JP-U- 3 230 968
- KR-A- 20050 121 904
- KR-A- 20080 050 452
- KR-A- 20100 081 342
- KR-A- 20100 081 342
- KR-A- 20130 033 077
- KR-A- 20160 031 640
- KR-A- 20200 069 375
- US-A1- 2009 117 459
- US-A1- 2011 123 845
- US-A1- 2017 117 516

## Description

### TECHNICAL FIELD

The present disclosure relates to a cylindrical battery cell, a battery pack including the cylindrical battery cell, and a vehicle including the battery pack.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source.

These secondary batteries are attracting attention as a new energy source for improving eco-friendliness and energy efficiency because they not only have the primary advantage of dramatically reducing the use of fossil fuels, but also do not generate any byproducts from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell has an operating voltage of about 2.5 V to 4.5 V.

Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number and electric connection pattern of battery cells included in the battery pack may be variously set according to at least one of a required output voltage and a charge/discharge capacity.

On the other hand, as a type of secondary battery cell, there are known cylindrical, prismatic, and pouch-type battery cells. In the case of a cylindrical battery cell, a separator, which is an insulator, is interposed between a positive electrode and a negative electrode, and this is wound to form a jelly-roll type electrode assembly, which is then inserted into a battery can together with an electrolyte to configure a battery.

Here, when the battery can is connected to a negative electrode or a positive electrode (typically a negative electrode) and has a polarity, insulation is also required between the battery can and the jelly-roll type electrode assembly.

Meanwhile, as the cylindrical battery cell is recently applied to an electric vehicle, the form factor of the cylindrical battery cell is increasing. That is, the diameter and height of the cylindrical battery cell are increasing compared to the conventional cylindrical battery cells having form factors such as 18650 and 21700. An increase in the form factor leads to an increase in energy density, an increase in safety against thermal runaway, and an improvement in cooling efficiency. In addition, in the case of a cylindrical battery cell with an increased form factor, insulation between the battery can and the jelly-roll type electrode assembly is becoming more important.

An insulator inserted into the cylindrical battery cell for insulation is usually manufactured in the form of a sheet. However, when the sheet-shaped insulator is placed on the jelly-roll type electrode assembly and inserted into the battery can, the insulator may move. Accordingly, since the insulator is separated from the correct position, insulation may be deteriorated and defects may occur.

EP 4 340 099 A1, which constitutes prior art pursuant to Art. 54(3) EPC, discloses a cylindrical secondary battery that includes: an electrode assembly including a first electrode plate and a second electrode plate; a cylindrical case having a disk-shaped top portion and a side portion extending from the top portion, the cylindrical case accommodating the electrode assembly; a cathode terminal extending through the top portion and insulated therefrom; a first current collector plate electrically connected to the first electrode plate and the cathode terminal; a second current collector plate electrically connected to the second electrode plate and the side portion of the cylindrical case; a cap plate coupled to the side portion and insulated therefrom; and an insulation tape between the top portion of the cylindrical case and the first current collector plate and covering the first current collector plate.

US 2011/123845 A1 discloses a secondary battery that includes a cylindrical battery case, a positive and negative electrode body group, a top plate and a battery lid connected to first and second electrode bodies of the electrode body group respectively. The secondary battery further includes a current collector placed on an end of the electrode body group on the top plate side and connected to the first electrode body of the electrode body group and a spacer placed between the top plate and the current collector. The top plate is partly formed with a thin portion. The spacer is formed with through holes in positions corresponding to the thin portion. The portion of the current collector corresponding to the thin portion is in contact with the thin portion through the through hole. The thin portion is deformed when the internal pressure of the battery case rises, thereby breaking electric connection between the top plate and the current collector.

CN 206461019 U discloses a aluminum hull cylinder battery. The aluminum shell column battery with an end-face flow-guiding structure is composed of a housing assembly, a positive pole assembly, and a battery core assembly. The housing assembly is formed by an aluminum hull with two negative pole rivets at the top and bottom. The positive pole assembly is made of an aluminum cover and a positive pole rivet. The battery core assembly consists of a flow guide bar, an anode current-collecting piece, the battery core, a cathode current-collecting piece, and an auxiliary metal piece.

US 2009/117459 A1 discloses a secondary battery and a method of manufacturing the secondary battery, the secondary battery including: an electrode assembly; a can to house the electrode assembly; and a cap assembly to seal an opening of the can. The cap assembly including: a cap-up; a safety element disposed on the cap-up; a safety vent disposed on the safety element; an insulating gasket disposed around the cap-up, the safety element, and the safety vent; and a cap body to clamp the insulating gasket. A portion of the cap body is joined to the opening of the can.

KR 20100081342 A discloses a battery is configured such that one end portion of a first electrode projects further than an end portion of a second electrode and an end portion of a separator in one end surface of an electrode group, the projecting end portion of the first electrode comprises an exposed portion of a first electrode core, the exposed portion of the first electrode core is welded to a connection portion of one surface of a first current collecting plate, and on the other surface of the first current collecting plate, an insulating layer is formed in a region other than the rear surface of the connection portion, whereby the exposed portion of the electrode core which projects from the one end surface of the electrode group can be reliably welded to a desired connection portion of the current collecting plate.

US 2017/117516 A1 discloses a secondary battery that includes an electrode assembly including a first electrode, a second electrode, and a separator between the first electrode and the second electrode, a cap assembly electrically connected to the first electrode, a case accommodating the electrode assembly therein, the case having an opening in which the cap assembly is inserted, a first insulator between the cap assembly and the case, and a second insulator between the first insulator and the cap assembly. In the secondary battery, the second insulator has a higher melting point than the first insulator, thereby improving durability.

CN 201781028 U discloses a secondary battery, which can obtain large current discharge characteristics by reducing an internal resistance and has simple and reliable assembly, and is characterized in that: a winding electrode body is accommodated in a battery shell with an opening at one end, and an opening end of the battery shell is closed by a sealing plate; collector plates are connected with the two ends of the electrode body, and the sealing plate is electrically connected with the collector plate through a leading-out piece; the leading-out piece comprises a bulge part which is connected with a connecting surface through a transition part, and the bulge part protrudes relative to the plane of the connecting surface; and the connecting surface is electrically connected with the sealing plate, and the bulge part is electrically connected with the collector plate. The connection of the collector plate and the sealing plate can be realized without bending the leading-out piece by increasing the length of the leading-out piece with the structure of the utility model, and the cross section area of the leading-out piece is also increased. Under the condition that the cross section area of the leading-out piece is increased and the length is shortened, compared with a general tool battery, the overcurrent area is increased, and the conductive path is shorter, accordingly, the internal resistance of the battery is reduced, thereby meeting the requirements of large current discharge characteristics of the secondary battery.

JP 2004-362956 A addresses the problem of how to provide a secondary battery equipped with a current breaking mechanism suitable for constructing the secondary battery with high capacity and a high output. The secondary battery cell is constructed by housing an electrode group formed by winding a positive electrode plate and negative electrode plate through a separator, and joining a positive electrode current collector plate at one end, and jointing a negative electrode current collector plate at the other end, in an external case formed into a bottomed cylinder shape with a spacer arranged at the positive electrode current collector plate side, and by welding a protrusion part of the positive electrode current collector plate to a bottom part of the external case at a welding point A, and by sealing the opening part of the external case by a sealing member. When internal pressure of the battery is increased in accordance with temperature increase of the battery due to overcharge or the like, and swelling generated at the bottom part becomes large, electric connection between the positive electrode current collector plate and the external case is broken by the breakage of the welding point A, and a current circuit is broken.

### DISCLOSURE

### Technical Problem

The present disclosure is designed to solve the problems of the related art, and therefore the present disclosure is directed to providing an electrode assembly in which an insulator is fixed to a battery can and does not move, so that when a jelly-roll type electrode assembly is inserted into the battery can later, the insulator may be coupled to the jelly-roll type electrode assembly at a correct position, thereby improving insulation and preventing the occurrence of defects, a cylindrical battery cell, a battery pack and a vehicle including the same.

The present disclosure is also directed to providing a battery pack manufactured using the cylindrical battery cell having an improved structure and a vehicle including the same.

### Technical Solution

The invention is defined by the independent claims. Advantageous embodiments are subject to the dependent claims.

In one aspect of the present disclosure, there is provided a cylindrical battery cell, comprising: a jelly-roll type electrode assembly in which a first electrode plate and a second electrode plate having a sheet shape and a separator interposed therebetween are wound in one direction; a battery can having an open portion in which the electrode assembly is accommodated and a partial closed portion opposite to the open portion and electrically connected to the second electrode plate; a current collection plate electrically connected to the first electrode plate; a cell terminal connected to the current collection plate through a perforated hole of the closed portion of the battery can; and an insulator interposed between the battery can and the current collection plate. At least one protrusion is provided on an outer circumference of the insulator so that the insulator is coupled to the battery can by fitting when the electrode assembly is accommodated in the battery can.

Preferably, the first electrode plate of the electrode assembly may include a first uncoated portion not coated with an active material layer at a long side end thereof, and the first uncoated portion may be exposed to the outside of the separator while forming a plurality of winding turns based on a center of the electrode assembly so as to be used as an electrode tab by itself and electrically connected to the current collection plate.

Preferably, the insulator may have a shape corresponding to a cross-sectional shape of the jelly-roll type electrode assembly.

Preferably, the protrusion may be provided in plurality, and the plurality of protrusions may be provided at a preset interval on the outer circumference of the insulator.

Preferably, the protrusions may be spaced apart from each other at the same interval on the outer circumference of the insulator.

In another aspect, a thermal fusion layer may be formed on a surface of the insulator facing an inner surface of the closed portion of the battery can so that the insulator is fixed to the battery can by thermal fusion when the electrode assembly is accommodated in the battery can.

In still another aspect, an adhesion layer may be formed on an upper surface of the insulator in contact with the battery can so that the insulator is fixed to the battery can by adhesion when the electrode assembly is accommodated in the battery can.

In still another aspect, the insulator may be fixed to the battery can by a double-sided adhesive tape.

Preferably, at least one through hole may be formed in an upper surface of the insulator connected from an outer circumference of the insulator so that an electrolyte moves therethrough.

Preferably, the through hole may be provided in plurality, and the plurality of through holes may be spaced apart from each other at a preset interval.

Preferably, the plurality of through holes may be arranged on one straight line formed from a center portion of the insulator toward the outer circumference of the insulator.

Preferably, the plurality of through holes may be arranged on each of a plurality of straight lines radially arranged from a center portion of the insulator toward the outer circumference of the insulator.

Preferably, the arrangement interval of the plurality of through holes may increase or decrease along the radial direction.

Preferably, a diameter of the through hole may be 1.0 mm to 3.0 mm.

In one aspect, a distance from a center of the insulator to an end of the protrusion may be greater than a radius of the electrode assembly.

In another aspect, a distance from a center of the insulator to an end of the protrusion may be greater than an inner diameter of the battery can.

Preferably, an edge of the insulator may have a cross-sectional shape complementary to a cross-sectional shape of a corner of the closed portion of the battery can.

Preferably, the insulator may have a thickness corresponding to a distance between an inner surface of the closed portion of the battery can and the current collection plate.

Preferably, the insulator may have a thickness of 0.8 mm or more and 1.6 mm or less.

In one aspect, an upper portion of the insulator may be in contact with an inner surface of the closed portion of the battery can, and a lower portion of the insulator may be in contact with an upper surface of the current collection plate.

Preferably, the insulator may include an insulating polymer material.

Preferably, the insulator may be made of polyethylene terephthalate (PET), polybutylene terephthalate (PBT) or polypropylene (PP).

Preferably, the insulator may be made of a material having elasticity.

Preferably, the insulator may have a center hole formed in a center portion thereof and having a preset diameter, and the center hole may expose a lower portion of the cell terminal.

Preferably, an insulating tape may be attached to an outer circumference of the electrode assembly at least to a point corresponding to an edge of the insulator.

**In** one aspect, at least a partial region of the first uncoated portion may be divided into a plurality of segments along a winding direction of the electrode assembly.

**In** another aspect, the plurality of segments may be bent along a radial direction of the electrode assembly.

**In** still another aspect, the plurality of segments may be overlapped in several layers along a radial direction of the electrode assembly.

Preferably, a closed portion and an open portion located to face each other may be formed in the battery can, and the cylindrical battery cell may further comprise a cap plate configured to seal the open portion of the battery can.

Preferably, the cylindrical battery cell may further comprise a sealing gasket interposed between an edge of the cap plate and the open portion of the battery can, the battery can may include a beading portion formed in a region adjacent to the open portion and press-fitted into the battery can, and the battery can may include a crimping portion extended and bent into the battery can to wrap and fix the edge of the cap plate together with the sealing gasket.

Preferably, the crimping portion may be formed in a lower portion of the battery can based on an arrangement state of the battery can.

Preferably, the cap plate may include a vent notch that is ruptured when a pressure inside the battery can exceeds a threshold.

Preferably, the vent notch may be formed on both surfaces of the cap plate and formed in at least one pattern among a continuous circular pattern, a discontinuous circular pattern and a straight line pattern on the surface of the cap plate.

Preferably, the vent notch may be formed in a lower portion of the battery can based on an arrangement state of the battery can, and gas inside the battery can may be discharged through the lower portion of the battery can when the vent notch is ruptured.

Preferably, the insulating tape may include a folding portion with a width of 3 mm to 10 mm.

Preferably, the insulating tape may include a polyimide-based resin layer.

In another aspect of the present disclosure, there is provided a battery pack comprising at least one cylindrical battery cell described above, and a vehicle comprising at least one battery pack.

In another aspect of the present disclosure, there is provided a method for manufacturing a cylindrical battery cell, comprising: (a) preparing a jelly-roll type electrode assembly in which a first electrode plate and a second electrode plate having a sheet shape and a separator interposed therebetween are wound in one direction; (b) coupling a current collection plate to a first uncoated portion of the electrode assembly; (c) preparing a battery can having an open portion in which the electrode assembly is accommodated and a partial closed portion opposite to the open portion and electrically connected to the second electrode plate; (d) coupling a cell terminal through a perforated hole of the closed portion of the battery can; (e) coupling an insulator to an inner surface of the closed portion of the battery can; and (f) inserting the electrode assembly into the battery can so that the insulator is interposed between the battery can and the current collection plate. At least one protrusion is provided on an outer circumference of the insulator, and the step (e) may include a step of coupling the insulator to the battery can by fitting.

Preferably, in the step (a), the first electrode plate of the electrode assembly may include a first uncoated portion not coated with an active material layer at a long side end thereof, and the first uncoated portion may be exposed to the outside of the separator while forming a plurality of winding turns based on a center of the electrode assembly so as to be used as an electrode tab by itself and electrically connected to the current collection plate.

Preferably, the protrusion may be provided in plurality, and the plurality of protrusions may be provided at a preset interval on the outer circumference of the insulator, and in the step (e), the protrusion may be compressed by the fitting.

In another aspect, a thermal fusion layer may be formed on a surface of the insulator facing an inner surface of the closed portion of the battery can, and the step (e) may include a step of fixing the insulator to the battery can by thermal fusion.

In still another aspect, an adhesion layer may be formed on an upper surface of the insulator in contact with the battery can, and the step (e) may include a step of fixing the insulator to the battery can by adhesion.

In still another aspect, the step (e) may include a step of fixing the insulator to the battery can by a double-sided adhesive tape.

In still another aspect, the method may further comprise: (g) injecting an electrolyte in a state in which the battery can stands up so that the cell terminal faces in the direction of gravity.

Preferably, at least one through hole may be formed in an upper surface of the insulator connected from an outer circumference of the insulator, and in the step (g), the electrolyte may move into the electrode assembly through the through hole.

Preferably, at least one through hole may be formed in an upper surface of the insulator connected from an outer circumference of the insulator, and the method may further comprise a step in which the electrolyte moves into the electrode assembly through the through hole.

Preferably, the through hole may be formed in plurality, and the plurality of through holes may be spaced apart from each other at a preset interval.

Preferably, the plurality of through holes may be arranged on one straight line formed from a center portion of the insulator toward the outer circumference of the insulator.

Preferably, the plurality of through holes may be arranged on each of a plurality of straight lines radially arranged from a center portion of the insulator toward the outer circumference of the insulator.

### Advantageous Effects

According to one aspect of the present disclosure, since the insulator is fixed to the battery can and does not move, when the jelly-roll type electrode assembly is inserted into the battery can later, the insulator may be coupled to the jelly-roll type electrode assembly at the correct position, thereby improving the insulation and preventing the occurrence of defects.

According to another aspect of the present disclosure, it is possible to provide a battery pack with an improved capacity manufactured using the cylindrical battery cell having an improved structure, and a vehicle including the same.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a cylindrical battery cell according to an embodiment of the present disclosure.
FIG. 2 is a cross-sectional perspective view showing a cross section of a center portion of the cylindrical battery cell of FIG. 1.
FIG. 3 is a cross-sectional view of a cylindrical battery cell according to an embodiment of the present disclosure.
FIG. 4 is a perspective view of an insulator in the cylindrical battery cell according to an embodiment of the present disclosure.
FIGS. 5 to 7 are modified embodiments of the insulator of FIG. 4.
FIG. 8 is a diagram showing a battery can in the cylindrical battery cell according to an embodiment of the present disclosure.
FIG. 9 is an enlarged view of a cell terminal in the cylindrical battery cell according to an embodiment of the present disclosure.
FIG. 10 is a cross-sectional view of another embodiment of the cylindrical battery cell of FIG. 3.
FIG. 11 is a plan view showing the structure of an electrode plate according to an embodiment of the present disclosure.
FIG. 12 is a diagram showing the definition of a width, a height and a spacing pitch of a segment according to FIG. 11.
FIG. 13 is a plan view showing the structure of an electrode plate according to another embodiment of the present disclosure.
FIG. 14 is a diagram showing the definition of a width, a height, and a spacing pitch of a segment according to FIG. 13.
FIG. 15 is a cross-sectional view taken along a Y-axis direction (winding axis direction) of the electrode assembly according to an embodiment of the present disclosure.
FIG. 16 is a cross-sectional view taken along the Y-axis direction (winding axis direction) of an electrode assembly according to another embodiment of the present disclosure.
FIG. 17 is a diagram schematically showing the configuration of a battery pack according to an embodiment of the present disclosure.
FIG. 18 is a diagram for explaining a vehicle including the battery pack of FIG. 17.
FIGS. 19 to 25 are diagrams illustrating a process of manufacturing a cylindrical battery cell according to an embodiment of the present disclosure.

### BEST MODE

Hereinafter, preferred embodiments of the present disclosure will be described in detail with reference to the accompanying drawings.

In addition, in order to help understanding of the present disclosure, the accompanying drawings are not drawn to scale, but dimensions of some components may be exaggerated. Also, the same reference numerals may be assigned to the same components in different embodiments.

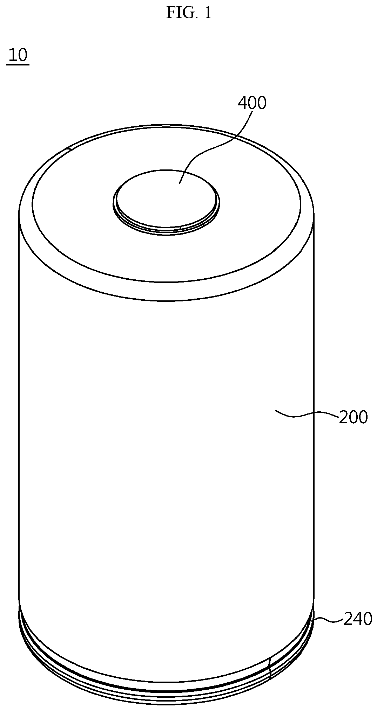

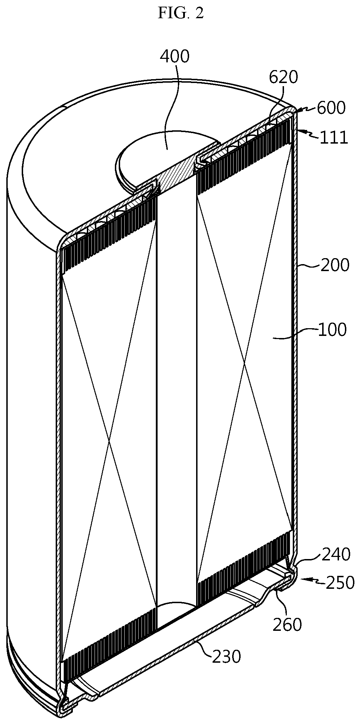

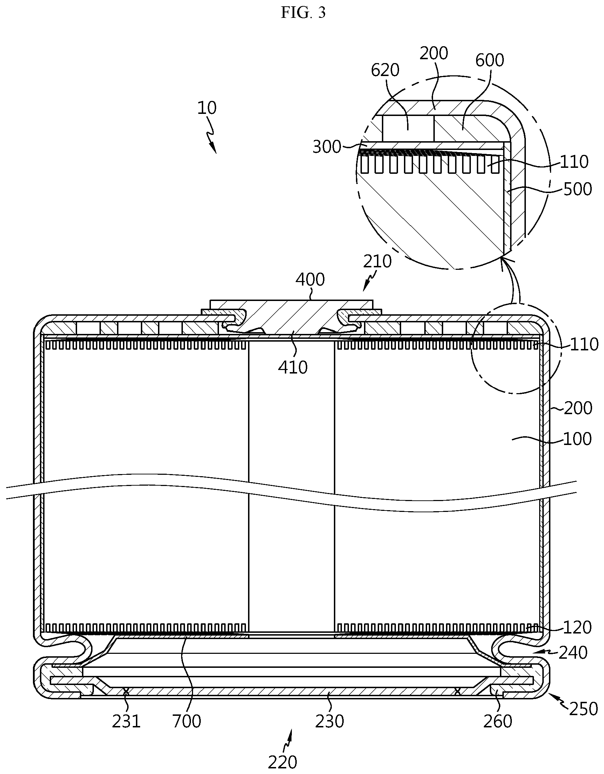

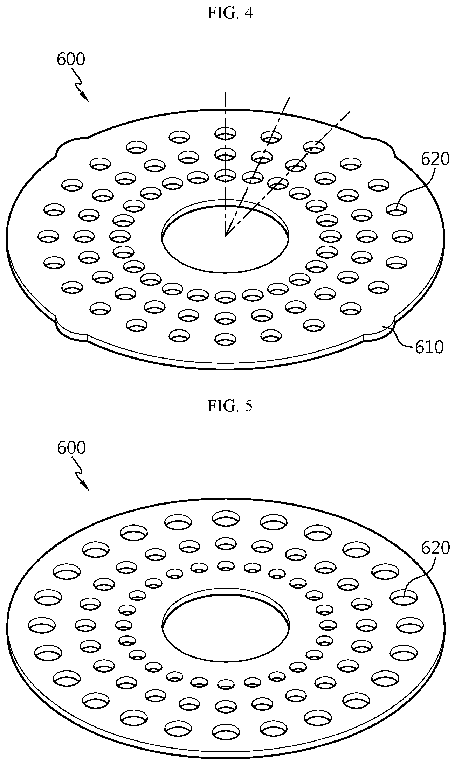

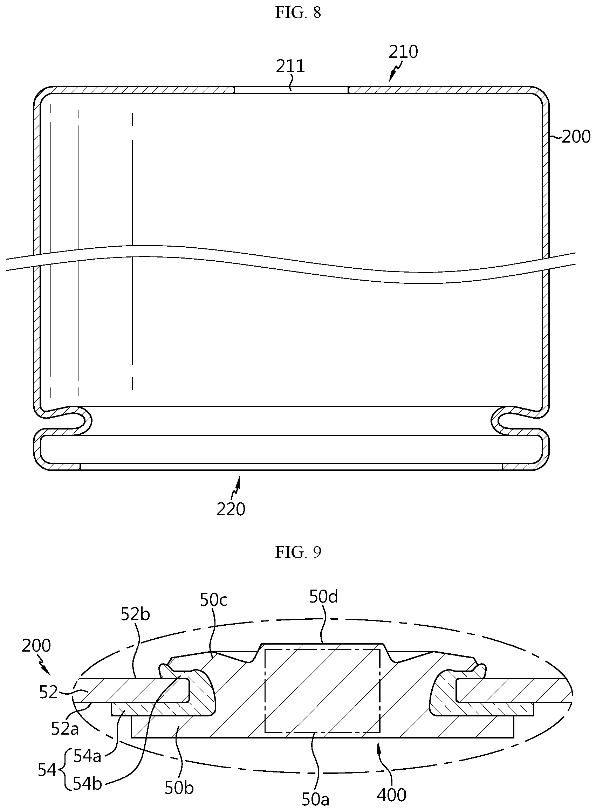

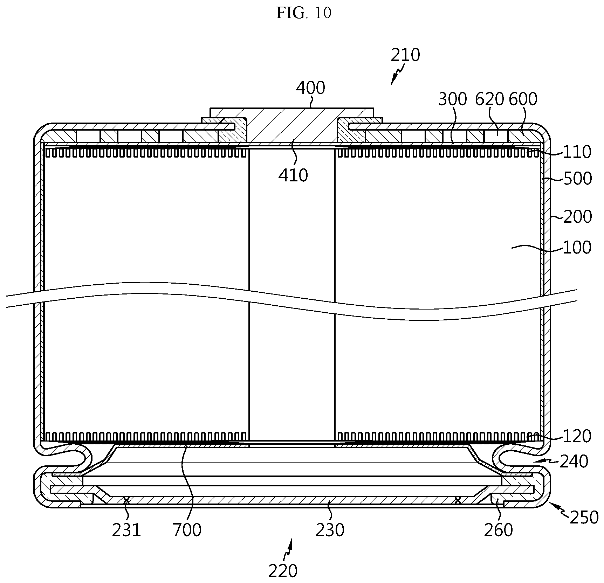

FIG. 1 is a diagram showing a cylindrical battery cell according to an embodiment of the present disclosure, FIG. 2 is a cross-sectional perspective view showing a cross section of a center portion of the cylindrical battery cell of FIG. 1, FIG. 3 is a cross-sectional view of a cylindrical battery cell according to an embodiment of the present disclosure, FIG. 4 is a perspective view of an insulator in the cylindrical battery cell according to an embodiment of the present disclosure, FIGS. 5 to 7 are modified embodiments of the insulator of FIG. 4, FIG. 8 is a diagram showing a battery can in the cylindrical battery cell according to an embodiment of the present disclosure, FIG. 9 is an enlarged view of a cell terminal in the cylindrical battery cell according to an embodiment of the present disclosure, and FIG. 10 is a cross-sectional view of another embodiment of the cylindrical battery cell of FIG. 3.

A cylindrical battery cell 10 according to an embodiment of the present disclosure will be described.

Preferably, the cylindrical battery cell 10 may be, for example, a cylindrical battery cell 10 having a form factor ratio (defined as a value obtained by dividing the diameter of the cylindrical battery cell by height, that is, a ratio of diameter (Φ) to height H) greater than about 0.4.

Here, the form factor means a value indicating the diameter and height of the cylindrical battery cell 10. The cylindrical battery cell 10 according to an embodiment of the present disclosure may be, for example, a 4-segment (61)10 cell, a 48750 cell, a 48110 cell, a 48800 cell, or a 46800 cell. In the numerical value representing the form factor, the first two numbers indicate the diameter of the cell, the next two numbers indicate the height of the cell, and the last number 0 indicates that the cross-section of the cell is circular. When the height of the cell exceeds 100 mm, the last number can be omitted because a 3-digit number is needed to indicate the height.

A battery cell according to an embodiment of the present disclosure is a cell in an approximately cylindrical shape, and may be a cylindrical battery cell 10 having a diameter of approximately 46 mm, a height of approximately 110 mm, and a form factor ratio of 0.418.

A battery cell according to another embodiment is a cell in an approximately cylindrical shape, and may be a cylindrical battery cell 10 having a diameter of about 48 mm, a height of about 75 mm, and a form factor ratio of 0.640.

A battery cell according to still another embodiment is a cell in an approximately cylindrical shape, and may be a cylindrical battery cell 10 having a diameter of about 48 mm, a height of about 110 mm, and a form factor ratio of 0.418.

A battery cell according to still another embodiment is a cell in an approximately cylindrical shape, and may be a cylindrical battery cell 10 having a diameter about 48 mm, a height of about 80 mm, and a form factor ratio of 0.600.

A battery cell according to still another embodiment is a cell in an approximately cylindrical shape, and may be a cylindrical battery cell 10 having a diameter of about 46 mm, a height of about 80 mm, and a form factor ratio of 0.575.

Conventionally, battery cells having a form factor ratio of about 0.4 or less have been used. That is, conventionally, for example, 18650 cell, 21700 cell, etc. were used. The 18650 cell has a diameter of approximately 18 mm, a height of approximately 65 mm, and a form factor ratio of 0.277. The 21700 cell has a diameter of approximately 21 mm, a height of approximately 70 mm, and a form factor ratio of 0.300.

Referring to FIGS. 2 and 3, the cylindrical battery cell 10 according to an embodiment of the present disclosure includes an electrode assembly 100, a cylindrical battery can 200, a current collection plate 300, a cell terminal 400, and an insulator 600. Here, reference numeral 500 denotes an insulating tape 500 for insulating the side surface of the electrode assembly 100 as described later, and the insulating tape 500 may prevent contact between the current collection plate 300 and the battery can 200. The insulating tape 500 may cover at least the top outer circumference of the electrode assembly 100. Here, the insulating tape may include a folding portion with a width of 3 mm to 10 mm. In addition, the insulating tape may include a polyimide-based resin layer.

The electrode assembly 100 is provided so that a first electrode plate and a second electrode plate having a sheet shape are wound in one direction with a separator interposed therebetween. That is, the electrode assembly 100 is a jelly-roll type having a structure in which the first electrode plate and the second electrode plate having a sheet shape and the separator interposed therebetween are wound in one direction. The first electrode plate may have a positive polarity or a negative polarity, and the second electrode plate has a polarity opposite to that of the first electrode plate. That is, the first electrode plate may be a positive electrode plate or a negative electrode plate, and the second electrode plate may be a negative electrode plate or a positive electrode plate such that its polarity is opposite to that of the first electrode plate. However, hereinafter, for convenience of explanation, the case where the first electrode plate is a positive electrode plate and the second electrode plate is a negative electrode plate will be mainly described. On the other hand, a detailed description of the electrode assembly 100 is replaced with the above description.

The electrode assembly 100 is composed of various jelly-roll types and may be changed. For example, an uncoated portion may be formed in the electrode assembly 100. Here, the uncoated portion may be used as an electrode tab by itself, or electrode tabs of various shapes may be connected to the uncoated portion in various ways. Hereinafter, for convenience of description, the uncoated portion will be described mainly based on an embodiment in which the electrode tab itself is used, but the electrode assembly 100 may be implemented with more various modifications.

Referring to FIG. 3, the first electrode plate may include a first uncoated portion 110 not coated with an active material layer at a long side end thereof. In addition, the second electrode plate may also include a second uncoated portion 120 not coated with an active material layer at a long side end thereof. That is, at least one of the first electrode plate and the second electrode plate may include an uncoated portion not coated with an active material at the long side end in the winding direction.

Here, the first uncoated portion 110 and the second uncoated portion 120 are exposed to the outside of the separator while forming a plurality of winding turns based on the center of the electrode assembly 100 so as to be used as an electrode tab by itself.

The above-described insulator 600 may be coupled to the electrode assembly 100. Preferably, the insulator 600 is configured to cover the upper end of the first uncoated portion 110 for insulation. The insulator 600 prevents contact between the first uncoated portion 110 and the battery can 200. In the case of FIG. 3, the current collection plate 300 is coupled to the upper side of the first uncoated portion 110, and the insulator 600 is coupled to the upper side of the current collection plate 300. That is, the insulator 600 is accommodated in the battery can 200, covers at least a portion of the electrode assembly 100, and is configured to block the electrical connection between the first uncoated portion 110 and the battery can 200. Here, when the current collection plate 300 is provided on the upper side of the first uncoated portion 110, the insulator 600 is coupled to the current collection plate 300 on the upper side of the current collection plate 300 to block the electrical connection between the battery can 200 and the current collection plate 300. Accordingly, the insulator 600 may be made of a material having insulating performance. Preferably, the insulator 600 may include, but is not limited to, an insulating polymer material. For example, the insulator 600 may be made of polyethylene terephthalate (PET), polybutylene terephthalate (PBT), or polypropylene (PP).

The insulator 600 is interposed between the battery can 200 and the current collection plate 300 to cover the upper end of the first uncoated portion 110. The insulator 600 may prevent the contact between the first uncoated portion 110 and the battery can 200 and between the current collection plate 300 and the battery can 200 together with the insulating tape 500. That is, the insulator 600 may prevent the contact between the upper side of the first uncoated portion 110 and the battery can 200 or between the current collection plate 300 and the battery can 200, and the insulating tape 500 may prevent the contact between the side surface of the electrode assembly 100 and the battery can 200. In particular, the insulating tape 500 may prevent the contact between the side surface of the first uncoated portion 110 and the battery can 200.

The insulator 600 may be formed in a shape corresponding to the cross-sectional shape of the jelly-roll type electrode assembly 100. For example, if the cross section of the jelly-roll type electrode assembly 100 is circular, the shape of the insulator 600 may also be circular.

The insulator 600 may be coupled to the battery can 200 in a variety of ways. In one embodiment, before the electrode assembly 100 is accommodated in the battery can 200, the insulator 600 may be coupled to the battery can 200 by fitting. According to the embodiments of the invention, referring to FIG. 4, at least one protrusion 610 is formed on the outer circumference of the insulator 600.

Preferably, the protrusion 610 may be provided in plurality, and the plurality of protrusions 610 may be formed at a preset interval on the outer circumference of the insulator 600. In FIG. 4, four protrusions 610 are formed, but the present disclosure is not limited thereto. When four protrusions 610 are formed, four protrusions 610 may be formed spaced apart at the same interval on the outer circumference of the insulator 600. If the insulator 600 having the protrusion 610 formed on the outer circumference is coupled to the battery can 200, the protrusion 610 is compressed and deformed, so that the insulator 600 may be coupled to the inner surface of the battery can 200 by fitting.

Preferably, the distance from the center of the insulator 600 to the end of the protrusion 610 may be greater than the radius of the electrode assembly 100. Alternatively, the distance from the center of the insulator 600 to the end of the protrusion 610 may be greater than the inner diameter of the battery can 200. As a result, when the insulator 600 is inserted into the battery can 200, the protrusion 610 is compressed and the insulator 600 may be coupled to the battery can 200 in a fitting manner.

In another embodiment, a thermal fusion layer may be formed on the insulator 600 so that the insulator 600 is fixed to the battery can 200 by thermal fusion. That is, before the electrode assembly 100 is accommodated in the battery can 200, the insulator 600 may be inserted into the battery can 200 and then fixed thereto by thermal fusion through hot air spraying or heating.

In still another embodiment, an adhesion layer may be formed on the upper surface of the insulator 600 in contact with the battery can 200 so that the insulator 600 is fixed to the battery can 200 by adhesion. That is, before the electrode assembly 100 is accommodated in the battery can 200, the insulator 600 may be coupled to the battery can 200 by the adhesion layer formed on the upper surface of the insulator 600.

In still another embodiment, the insulator 600 may be fixed to the battery can 200 by a double-sided adhesive tape. Here, when the insulator 600 is fixed to the battery can 200 by thermal fusion, adhesion, or the double-sided adhesive tape, the protrusion 610 is unnecessary on the outer circumference of the insulator 600 as shown in FIG. 5.

As described above, when the electrode assembly 100 is inserted into the battery can 200 while the insulator 600 is fixed to the battery can 200, the insulator 600 may be coupled to the correct position of the jelly-roll type electrode assembly 100. Thus, the insulation of the cylindrical battery cell may be improved and the occurrence of defects may be prevented.

The insulator 600 may have a thickness of 0.8 mm or more and 1.6 mm or less. If the insulator 600 is too thin, insulation may deteriorate, and if the insulator 600 is too thick, the insulator 600 takes up a lot of space inside the battery can 200, thereby reducing the capacity of the battery cell and increasing the cost. Therefore, the insulator 600 may have a thickness of 0.8 mm or more and 1.6 mm or less, preferably 1.0 mm to 1.4 mm so that the capacity of the battery cell is not reduced while maintaining proper insulation. However, the thickness of the insulator 600 is not limited thereto.

Referring to FIG. 4, at least one through hole 620 may be formed in the upper surface of the insulator 600 connected from the outer circumference of the insulator 600 so that an electrolyte may move therethrough. Here, when an electrolyte is injected into the battery can 200, the insulator 600 may be placed on the bottom thereof. That is, the electrolyte may be injected into the battery can 200 in a state in which the cylindrical battery cell 10 of FIG. 3 is arranged so that the top and bottom are inverted, that is, the cell terminal 400 is located at the lower side.

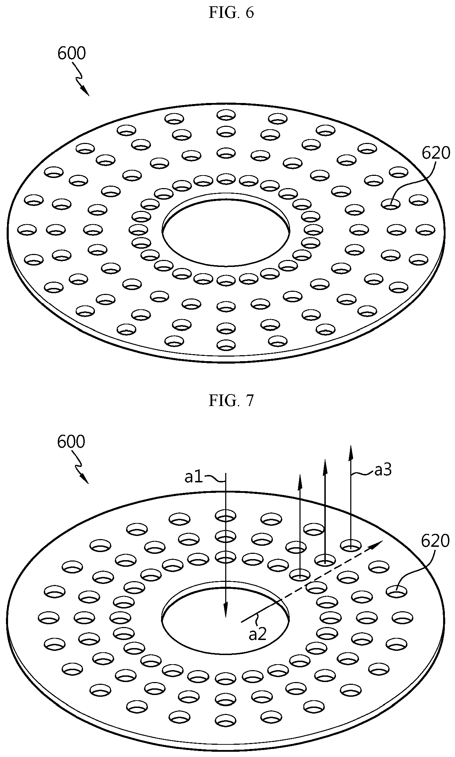

And, referring to the arrow of FIG. 7, the electrolyte moves downward through the center portion of the insulator 600 in the direction of arrow a1 (the direction in which the electrolyte is injected), then moves in the direction of arrow a2 through the bottom of the insulator 600, and moves upward through the through hole 620 as in the direction of arrow a3 to be provided to the electrode assembly 100. At this time, if the through hole 620 is formed in the insulator 600, the electrolyte may be smoothly and easily provided to the electrode assembly 100.

The through hole 620 may be formed in plurality, and the plurality of through holes 620 may be spaced apart from each other at a preset interval. Referring to FIG. 4, the plurality of through holes 620 may be arranged on any one straight line formed from the center portion of the insulator 600 toward the outer circumference of the insulator 600. In FIGS. 4 and 7, three through holes 620 are arranged in each of a plurality of straight lines radially arranged from the center portion of the insulator 600 toward the outer circumference of the insulator 600, but the number, shape and/or arrangement of the through holes 620 is not limited thereto.

Referring to FIG. 5 as one modified embodiment, the diameter of the through hole 620 arranged in the radial direction of the insulator 600 may be the same or may be changed. In one example, the diameter of the through hole 620 may be identical, increase or decrease from the center toward the edge. Since the electrolyte moves from the center of the insulator 600 to the edge, the closer to the center of the insulator 600, the greater the amount of electrolyte moving in the direction of arrow a3. Therefore, by increasing the size of the through hole 620 toward the edge of the insulator 600, the amount of moving electrolyte may be similarly controlled as a whole. However, if necessary, the size of the through hole 620 may be reduced toward the edge of the insulator 600.

Referring to FIG. 6 as another modified embodiment, the interval at which the plurality of through holes 620 are arranged in the radial direction of the insulator 600 may be the same or may be varied. In one example, the arrangement interval of the through holes 620 may increase or decrease from the center to the edge.

Here, the diameter of the through hole may be 1.0 mm to 3.0 mm, preferably 1.2 mm to 1.7 mm.

The edge of the insulator 600 may have a cross-sectional shape complementary to the cross-sectional shape of the corner of the closed portion 210 of the battery can 200. For example, when a round is formed in the cross section of the corner of the closed portion 210 of the battery can 200, a round may also be formed in the edge of the insulator 600 to correspond to the rounded cross section of the corner of the closed portion 210 of the battery can 200.

Preferably, the insulator 600 may have a thickness corresponding to the distance between the inner surface of the closed portion 210 of the battery can 200 and the current collection plate 300. For example, an upper portion of the insulator 600 may be in contact with an inner surface of the closed portion 210 of the battery can 200, and a lower portion of the insulator 600 may be in contact with an upper surface of the current collection plate 300. Preferably, the insulator 600 may have a thickness of 0.8 mm or more and 1.6 mm or less.

The insulator 600 may include, for example, a material having elasticity. Therefore, when vibration or external shock is applied to the cylindrical battery cell 10, the insulator 600 may absorb the shock in the process of being compressed and then restored to its original state by elasticity. Accordingly, even when vibration or external shock is applied to the battery cell, damage to internal components of the battery cell may be minimized.

The insulator 600 has a center hole with a preset diameter in the center portion, and the center hole may expose the lower portion of the cell terminal 400. For example, the insulator 600 may have an approximately circular center hole adjacent to the winding center. Due to the presence of the center hole, the cell terminal 400 may come into contact with the current collection plate 300 or the first uncoated portion 110. Preferably, the center hole has a diameter capable of exposing the lower portion of the cell terminal 400.

The insulating tape 500 may be attached to the outer circumference of the electrode assembly 100 at least to a point corresponding to the edge of the insulator 600. The insulating tape 500 may be a double-sided adhesive tape or a single-sided adhesive tape. In addition, the present disclosure is not limited to the insulating tape, and a heat shrinkable tube may be coupled to the outer circumference of the electrode assembly 100.

The first electrode plate is coated with a first electrode active material on one surface or both surfaces thereof. In addition, the first uncoated portion 110 not coated with the first electrode active material is present at the end of the first electrode plate.

The second electrode plate is coated with a second electrode active material on one surface or both surfaces thereof. In addition, the second uncoated portion 120 not coated with the second electrode active material is present at the end of the second electrode plate.

In addition, the first uncoated portion 110 of the first electrode plate and the second uncoated portion 120 of the second electrode plate are provided to face in opposite directions when wound into the electrode assembly. The first uncoated portion 110 extends toward the closed portion 210 of the battery can 200, and the second uncoated portion 120 extends toward the open portion 220 of the battery can 200.

In the present disclosure, the positive electrode active material coated on the positive electrode plate and the negative electrode active material coated on the negative electrode plate may be used without limitation as long as it is an active material known in the art.

In one example, the positive electrode active material has the general formula A[AₓM_{y}]O_{2+z} (A includes at least one element of Li, Na and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; stoichiometric coefficients x, y and z are selected such that the compound remains electrically neutral).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; 0≤x≤1.

In still another example, the positive electrode active material may be lithium metal phosphate expressed by includes the general formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally containing F; stoichiometric coefficients a, x, y and z are selected such that the compound remains electrically neutral), or Li₃M₂ (PO₄)₃ (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may be a carbon material, lithium metal or lithium metal compound, silicon or silicon compound, tin or tin compound, or the like. Metal oxides such as TiO₂ and SnO₂ with a potential of less than 2 V may also be used as the negative electrode active material. As the carbon material, all of low-crystalline carbon, high-crystalline carbon, and the like may be used.

The separator may use porous polymer films, for example, porous polymer films made of a polyolefin-based polymer such as ethylene homopolymer, propylene homopolymer, ethylene/butene copolymer, ethylene/hexene copolymer, ethylene/methacrylate copolymer, and the like alone or by laminating them. As another example, the separator may use a conventional porous nonwoven fabric, for example, a nonwoven fabric made of glass fiber, polyethylene terephthalate fiber, or the like having a high melting point.

At least one surface of the separator may include a coating layer of inorganic particles. It is also possible that the separator itself is made of a coating layer of inorganic particles. Particles constituting the coating layer may be combined with a binder so that an interstitial volume exists between adjacent particles.

The inorganic particles may be formed of an inorganic material having a dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB (Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure such as A⁺B⁻. Here, A⁺ includes an ion composed of an alkali metal cation such as Li⁺, Na⁺ and K⁺, or a combination thereof. In addition, B⁻ includes at least one anions selected from the group consisting of F⁻, Cl⁻, Br⁻, I⁻, NO₃⁻, N (CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SFs)₃C⁻, (CF₃SO₂)₃C⁻, CF₃ (CF₂)₇SO₃⁻, CF₃CO₂⁻, CH₃CO₂⁻, SCN⁻ and (CF₃CF₂SO₂)₂N⁻.

The electrolyte may also be used by dissolving it in an organic solvent. As an organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or a mixture thereof may be used.

The battery can 200 is formed in a cylindrical shape to accommodate the electrode assembly 100 and is electrically connected to the second electrode plate of the electrode assembly 100. Accordingly, the battery can 200 may have the same polarity as the second electrode plate. That is, when the second electrode plate is a negative electrode, the battery can 200 also has a negative electrode.

If the size of the electrode assembly 100 is increased while the size of the battery can 200 is determined according to the standard, the total capacity of the battery cell increases, but the gap between the battery can 200 and the electrode assembly 100 decreases.

That is, if the size of the electrode assembly 100 is increased to increase the overall capacity of the battery cell, the gap between the battery can 200 and the electrode assembly 100 is reduced. Thus, the insulator 600 should be able to be interposed in the reduced gap between the battery can 200 and the electrode assembly 100, and for this, it is desirable that the thickness of the insulator 600 is as thin as possible.

Referring to FIG. 8, a closed portion 210 and an open portion 220 positioned to face each other may be formed in the battery can 200, respectively.

For example, based on FIG. 8, the open portion 220 may be formed in a lower portion of the battery can 200. The electrode assembly 100 is accommodated in the battery can 200 through the open portion 220 formed in the lower portion, and the electrolyte is also injected through the open portion 220 formed in the lower portion of the battery can 200. When the electrolyte is injected, the battery can 200 may be upside down so that the open portion 220 faces the top.

That is, the battery can 200 is a substantially cylindrical container having the open portion 220 formed in the lower portion thereof, and is made of, for example, a material having conductivity such as a metal. The material of the battery can 200 may be a conductive metal, for example, aluminum, steel, stainless steel, etc., but is not limited thereto. A Ni coating layer may be selectively formed on the surface of the battery can 200.

Also, based on FIG. 8, the closed portion 210 may be formed in the upper portion of the battery can 200. A perforated hole 211 is formed in the closed portion 210, and the cell terminal 400 may be coupled to the perforated hole 211 as shown in FIG. 3.

A beading portion 240 and a crimping portion 250 may be formed in the lower portion of the battery can 200. The beading portion 240 is formed by press-fitting the outer circumference of the battery can 200 inward in an area adjacent to the open portion 220 of the battery can 200.

The beading portion 240 supports the electrode assembly 100 so that the electrode assembly 100 having a size approximately corresponding to the width of the battery can 200 does not come out through the open portion 220 formed in the lower portion of the battery can 200 and may also serve as a support portion on which the cap plate 230 is seated. Also, the beading portion 240 supports the surface of the outer circumference of the sealing gasket 260.

The crimping portion 250 is extended and bent into the battery can 200, and is provided to wrap and fix the edge of the cap plate 230 together with the sealing gasket 260. Here, the crimping portion 250 is formed in the lower portion of the battery can 200 based on the arrangement state of the battery can 200. For example, when the battery can 200 is disposed such that the cell terminal 400 is located in the upper portion as in FIG. 3, the crimping portion 250 is formed in the lower portion of the battery can 200 based on FIG. 3. In addition, the crimping portion 250 is formed in the lower portion of the beading portion 240 as shown in FIG. 3.

However, the present disclosure does not exclude the case where the battery can 200 does not include at least one of the beading portion 240 and the crimping portion 250. In the present disclosure, when the battery can 200 does not include at least one of the beading portion 240 and the crimping portion 250, the fixing of the electrode assembly 100 or the fixing of the cap plate 230 or the sealing of the battery can 200 may be implemented by at least one of additional application of a part that can function as a stopper for the electrode assembly 100, additional application of a structure on which the cap plate 230 can be seated, and welding between the battery can 200 and the cap plate 230.

Based on FIG. 3, the crimping portion 250 is formed in the lower portion of the beading portion 240. The crimping portion 250 has a shape extended and bent to wrap the edge of the cap plate 230 disposed under the beading portion 240. The cap plate 230 is fixed on the beading portion 240 by the shape of the folded crimping portion 250. Of course, it is also possible that the crimping portion 250 is omitted and the cap plate 230 is fixed while covering the open portion of the battery can 200 through another fixing structure. For example, the Korean patent publication KR 10-2019-0030016 A of this applicant discloses a cylindrical battery cell in which the beading portion is omitted, and such a structure may also be employed in the present disclosure.

The current collection plate 300 is electrically connected to the first electrode plate at the upper portion of the electrode assembly 100. The current collection plate 300 is made of a conductive metal material and is connected to the first uncoated portion 110 of the electrode assembly 100.

The current collection plate 300 may be coupled to an upper portion of the coupling surface formed by bending the end of the first uncoated portion 110 in a direction parallel to the current collection plate 300. The bending direction of the first uncoated portion 110 may be, for example, a direction toward the winding center portion of the electrode assembly 100.

When the first uncoated portion 110 has such a bent shape, the space occupied by the first uncoated portion 110 may be reduced, thereby improving energy density. In addition, due to an increase in the coupling area between the first uncoated portion 110 and the current collection plate 300, it is possible to bring about an effect of improving the coupling force and reducing the resistance.

The cell terminal 400 is made of a conductive metal material (e.g., aluminum) and is coupled to the perforated hole 211 formed in the closed portion 210 of the battery can 200 to be electrically connected to the current collection plate 300. In addition, the cell terminal 400 is electrically connected to the first electrode plate of the electrode assembly 100 through the current collection plate 300, thereby having a positive polarity. That is, the cell terminal 400 may function as a positive electrode terminal which is the first electrode terminal. In addition, the battery can 200 is electrically connected to the second electrode plate of the electrode assembly 100 as described above, thereby having a negative polarity.

The cell terminal 400 may include a terminal insert portion 410. The terminal insert portion 410 may be inserted into the battery can 200 through the perforated hole 211 formed in the closed portion 210 of the battery can 200 so that the lower end thereof may be electrically connected to the center portion of the current collection plate 300. The electrical connection may be made through welding. The welding may be laser welding, ultrasonic welding, resistance welding, or the like.

The terminal insert portion 410 may simultaneously penetrate the battery can 200 and the insulator 600 to be coupled with the current collection plate 300. As the lower edge portion of the terminal insert portion 410 is pressed by a caulking jig, the cell terminal 400 may be riveted toward the inner surface of the upper end of the battery can 200 and firmly fixed in the perforated hole.

That is, the end around the lower side of the terminal insert portion 410 may have a shape curved toward the inner surface of the battery can 200 by the application of the caulking jig. To this end, the maximum width of the end of the terminal insert portion 410 may be formed larger than the maximum width of the hole of the battery can 200 formed by the penetration of the terminal insert portion 410.

Referring to FIG. 9, the riveting structure of the cell terminal 400 may include a cylindrical battery can 200 with one open side, a cell terminal 400 riveted through the perforated hole 211 formed in the bottom 52 of the battery can 200, and a rivet gasket 54 interposed between the cell terminal 400 and the perforated hole 211.

The rivet gasket 54 may be made of a polymer resin having insulation and elasticity. In one example, the rivet gasket 54 may be made of polypropylene, polybutylene terephthalate, polyethylene fluoride, etc., but the present disclosure is not limited thereto.

The rivet gasket 54 may include an outer gasket 54a interposed between an outer flange portion 50b and an outer surface 52a of the bottom 52 of the battery can 200, and an inner gasket 54b interposed between an inner flange portion 50c and an inner surface 52b of the bottom 52 of the battery can 200. Preferably, the outer gasket 54a and the inner gasket 54b are divided based on the outer surface 52a of the bottom of the battery can 200.

On the other hand, as another embodiment, the terminal insert portion 410 may not have a shape curved toward the inner surface of the battery can 200. For example, referring to FIG. 10, the terminal insert portion 410 may have an approximately cylindrical shape penetrating a hole located at approximately the center portion of the upper surface of the battery can 200.

In an embodiment of the present disclosure, the terminal insert portion 410 may have a circular planar shape, but is not limited thereto. The terminal insert portion 410 may optionally have a polygonal shape, a star shape, a shape having a leg extending from the center, or the like.

The terminal insert portion 410 of the cell terminal 400 may penetrate the center hole of the insulator 600. In addition, the diameter of the center hole of the insulator 600 may be provided to be greater than or equal to the diameter of the terminal insert portion 410. In addition, the terminal insert portion 410 of the cell terminal 400 may be electrically coupled to the current collection plate 300 through the center hole of the insulator 600.

The insulator 600 is interposed between the battery can 200 and the electrode assembly 100, and in FIG. 3, between the current collection plate 300 on the electrode assembly 100 and the battery can 200. A detailed description of the insulator 600 is replaced with the description of the insulator 600 of the electrode assembly 100 according to an embodiment of the present disclosure described above.

Referring to FIG. 3, the cap plate 230 is configured to seal the open portion 220 of the battery can 200. The cap plate 230 may be made of, for example, a metal material to ensure rigidity.

The cap plate 230 seals the open portion 220 formed at the lower end of the battery can 200. The cap plate 230 may be separated from the electrode assembly 100 to be nonpolar. That is, the cap plate 230 may not have a polarity even if it is made of a conductive metal material. The fact that the cap plate 230 has no polarity means that the cap plate 230 is electrically insulated from the battery can 200 and the cell terminal 400. As such, the cap plate 230 does not need to have a polarity, and the material does not necessarily have to be a conductive metal.

The cap plate 230 may be seated and supported on the beading portion 240 formed in the battery can 200. In addition, the cap plate 230 is fixed by the crimping portion 250. The sealing gasket 260 may be interposed between the cap plate 230 and the crimping portion 250 of the battery can 200 to secure the airtightness of the battery can 200. That is, the sealing gasket 260 may be provided to be interposed between the edge of the cap plate 230 and the open portion 220 of the battery can 200.

On the other hand, the battery can 200 of the present disclosure may not include at least one of the beading portion 240 and the crimping portion 250, and in this case, the sealing gasket 260 may be interposed between the cap plate 230 and the fixing structure provided to the open portion 220 side of the battery can 200 to secure the airtightness of the battery can 200.

The vent notch 231 may be formed in the cap plate 230 to rupture when the pressure inside the battery can 200 exceeds a threshold.

For example, the vent notch 231 may be formed on both surfaces of the cap plate 230, and may be formed on the surface of the cap plate 230 in at least one pattern among a continuous circular pattern, a discontinuous circular pattern, and a straight line pattern. In addition, the vent notch 231 may be formed in a variety of other patterns.

The vent notch 231 is formed in the lower portion of the battery can 200 based on the arrangement state of the battery can 200, and when the vent notch 231 is ruptured, the gas inside the battery can 200 may be discharged through the lower portion of the battery can 200.

For example, when the battery can 200 is disposed such that the cell terminal 400 is located at the upper portion as in FIG. 3, the vent notch 231 may be formed in the lower portion of the battery can 200 based on FIG. 3.

The vent notch 231 may be formed as a region of the cap plate 230 having a thinner thickness compared to the surrounding region.

Since the vent notch 231 is thinner than the surrounding region, the vent notch 231 may be ruptured more easily than the surrounding region. Also, when the internal pressure of the battery can 200 increases to a certain level or more, the vent notch 231 may be ruptured so that the gas generated inside the battery can 200 may be discharged.

For example, the vent notch 231 may be formed by reducing the thickness of the battery can 200 partially through notching on any one surface of the cap plate 230 or on both surfaces thereof.

The cylindrical battery cell 10 according to an embodiment of the present disclosure may have a structure in which both a positive electrode terminal and a negative electrode terminal are present at the upper portion, and thus the structure of the upper portion is more complicated than the structure of the lower portion.

Accordingly, the vent notch 231 may be formed in the cap plate 230 constituting the lower surface of the cylindrical battery cell 10 in order to smoothly discharge the gas generated inside the battery can 200.

As such, when the gas generated inside the battery can 200 provided to the cylindrical battery cell 10 is discharged to the lower portion, it may be advantageous for the safety of the user. For example, when the cylindrical battery cell 10 is disposed directly under the driver's seat in an electric vehicle, if the gas is discharged to the upper portion, there may be a risk of a safety accident to the driver.

However, if the gas is discharged to the lower portion of the battery can 200 as in the cylindrical battery cell 10 according to an embodiment of the present disclosure, even if the cylindrical battery cell 10 is disposed directly under the driver's seat in the electric vehicle, the above problem does not occur.

Referring to FIG. 3, the lower end of the cap plate 230 is preferably disposed higher than the lower end of the battery can 200. In this case, even if the lower end of the battery can 200 touches the ground or the bottom surface of a housing for module or pack configuration, the cap plate 230 does not touch the ground or the bottom surface of the housing for module or pack configuration.

Accordingly, it is possible to prevent the pressure required for rupturing the vent notch 231 from being different from the design value due to the weight of the cylindrical battery cell 10, and thus, there is an effect that the rupture smoothness of the vent notch 231 is secured.

Referring to FIG. 3, a lower current collection plate 700 is coupled to the lower portion of the electrode assembly 100. The lower current collection plate 700 is made of a conductive metal material such as aluminum, steel, copper, or nickel, and is electrically connected to the second uncoated portion 120 of the second electrode plate.

Preferably, the lower current collection plate 700 is electrically connected to the battery can 200. To this end, at least a part of the edge of the lower current collection plate 700 may be interposed and fixed between the inner surface of the battery can 200 and the sealing gasket 260.

In one embodiment, at least a part of the edge portion of the lower current collection plate 700 may be fixed to the beading portion 240 by welding while being supported on the bottom surface of the beading portion 240 formed at the lower end of the battery can 200. In a modified embodiment, at least a part of the edge portion of the lower current collection plate 700 may be directly welded to the inner wall surface of the battery can 200.

Preferably, at least a part of the remaining portion other than the coupling portion of the beading portion of the lower current collection plate 700 may be coupled to the bending surface of the second uncoated portion 120 through welding, for example, laser welding.

Preferably, at least a part of the edge of the lower current collection plate 700 may be electrically coupled to one of the upper and lower surfaces of the beading portion 240 adjacent to the crimping portion 250.

On the other hand, the electrode assembly 100 according to an embodiment of the present disclosure may include a first electrode plate and a second electrode plate. Here, the first electrode plate may include a first uncoated portion 110, and the second electrode plate may include a second uncoated portion 120. In addition, at least a partial region of the first uncoated portion 110 and/or the second uncoated portion 120 may be divided into a plurality of segments. Hereinafter, the structure of the segment will be described in detail.

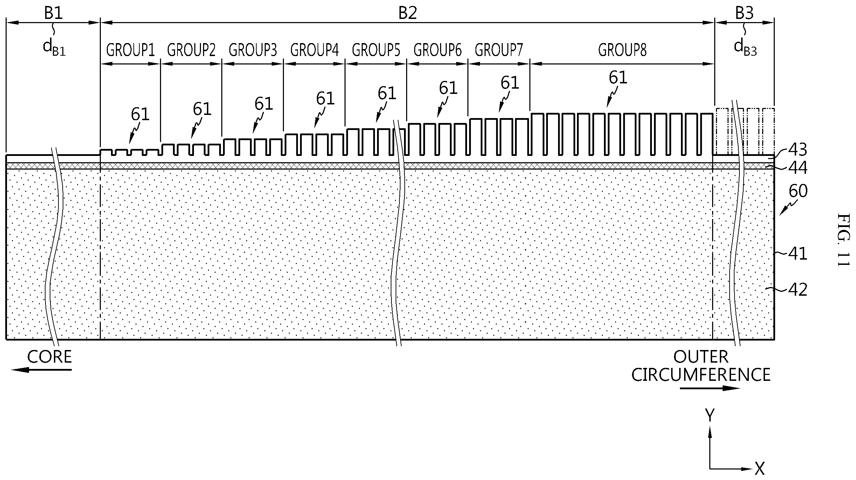

FIG. 11 is a plan view showing the structure of an electrode plate according to an embodiment of the present disclosure.

Referring to FIG. 11, in the uncoated portion 43 of the electrode plate 60, the heights of the core-side uncoated portion B1 and the outer-circumferential uncoated portion B3 are greater than or equal to 0, but are relatively smaller than that of the intermediate uncoated portion B2. Also, the heights of the core-side uncoated portion B1 and the outer-circumferential uncoated portion B3 may be the same or different.

Preferably, at least a partial region of the intermediate uncoated portion B2 may include a plurality of segments 61. The plurality of segments 61 may increase in height step by step from the core toward the outer circumference.

The segment 61 may be notched with a laser. The segment 61 may be formed by a known metal foil cutting process such as ultrasonic cutting or punching.

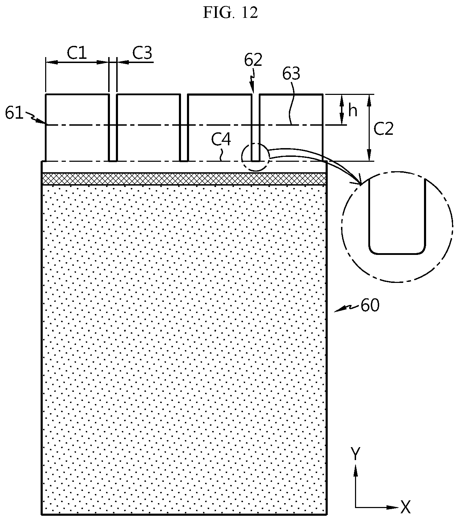

In FIG. 11, in order to prevent damage to the active material layer 42 and/or the insulating coating layer 44 during bending of the uncoated portion 43, a predetermined gap is desirably provided between the lower end C4 (FIG. 12) of the cutting line between the segments 61 and the active material layer 42. This is because stress is concentrated near the lower end of the cutting line when the uncoated portion 43 is bent. The gap is preferably 0.2 mm to 4 mm. When the gap is adjusted to the corresponding numerical range, it is possible to prevent the active material layer 42 and/or the insulating coating layer 44 near the lower end of the cutting line from being damaged by the stress generated during the bending processing of the uncoated portion 43. In addition, the gap may prevent damage to the active material layer 42 and/or the insulating coating layer 44 due to a tolerance during notching or cutting of the segment 61. Preferably, when the electrode plate 60 is wound, at least a part of the insulating coating layer 44 may be exposed to the outside of the separator. In this case, the insulating coating layer 44 may support the bending point when the segment 61 is bent.

The plurality of segments 61 may form a plurality of segment groups from the core toward the outer circumference. At least one of width, height and spacing pitch of segments belonging to the same segment group may be substantially the same.

FIG. 12 is a diagram showing the definition of a width, a height and a spacing pitch of the segment 61 according to FIG. 11. Referring to FIG. 12, the width C1, the height C2, and the spacing pitch C3 of the segments 61 are designed to prevent abnormal deformation of the uncoated portion 43 while preventing tearing of uncoated portion 43 during bending of uncoated portion 43 and sufficiently increasing the number of overlapping layers of the uncoated portion 43 to improve welding strength. The abnormal deformation means that the uncoated portion below the bending point does not maintain a straight line state and is deformed irregularly while sinking down.

Preferably, the width C1 of the segment 61 may be adjusted in the range of 1 mm to 8 mm. If C1 is less than 1 mm, when the segment 61 is bent toward the core, a nonoverlapping area or empty space occurs not to sufficiently secure the welding strength. On the other hand, if C1 exceeds 8 mm, there is a possibility that the uncoated portion 43 near the bending point may be torn by stress when the segment 61 is bent.

In addition, the height of the segment 61 may be adjusted in the range of 2 mm to 10 mm. If C2 is less than 2 mm, when the segment 61 is bent toward the core, a nonoverlapping area or empty space occurs not to sufficiently secure the welding strength. On the other hand, if C2 exceeds 10 mm, it is difficult to manufacture an electrode plate while uniformly maintaining the flatness of the uncoated portion in the winding direction (X). That is, the height of the uncoated portion increases to cause swelling. In addition, the spacing pitch C3 of the segments 61 may be adjusted in the range of 0.05 mm to 1 mm. If C3 is less than 0.05 mm, when the segment 61 is bent, the uncoated portion 43 near the bending point may be torn by stress. On the other hand, if C3 exceeds 1 mm, when segment 61 is bent, an area where the segments 61 do not overlap each other or an empty space (gap) may occur not to sufficiently secure the welding strength.

Referring to FIG. 12, a cut portion 62 is interposed between two segments 61 adjacent to each other in the winding direction (X). The cut portion 62 corresponds to a space formed while the uncoated portion 43 is removed. Preferably, the corner portion of the lower end of the cut portion 62 may have a round shape (see the partially enlarged view). The round shape may relieve the stress applied to the lower end of the cut portion 62 when the electrode plate 60 is wound and/or the segment 61 is bent.

Referring to FIG. 11 again, the width d_{B1} of the core-side uncoated portion B1 is designed by applying a condition that the core-side uncoated portion B1 does not cover the cavity of the electrode assembly core when the segment 61 of the intermediate uncoated portion B2 is bent toward the core.

In one example, the width d_{B1} of the core-side uncoated portion B1 may increase in proportion to the bending length of the segment 61 of the group 1. The bending length corresponds to the height of the segment 61 based on the bending point 63 (FIG. 12). Referring to FIG. 12, C4 represents the lowest point of a bendable position. The bending point may be appropriately set at the position indicated by C4 or above C4. The bending length is the length from the bending point to the upper end of the segment 61. Specifically, the bending point may be set at a predetermined point of the height C2 of the segment 61 based on C4. The predetermined point may be set to prevent the stress generated during bending of the segment 61 from causing physical damage to the active material layer 42 or the insulating coating layer 44, and to allow the number of layers overlapped in the radial direction when the segments 61 are bent in a direction opposite to the electrode assembly to be sufficiently secured so that sufficient welding strength may be secured when the current collector plate is welded to the region where the segments 61 are bent.

In a specific example, when the electrode plate 60 is used to manufacture an electrode assembly of a cylindrical cell having a form factor of 46800, the width d_{B1} of the core-side uncoated portion B1 may be set as 180 mm to 350 mm according to the diameter of the core of the electrode assembly.

In one embodiment, the width of each segment group may be designed to constitute the same winding turn of the electrode assembly.

Here, the winding turn may be counted based on the end of the core-side uncoated portion B1 when the electrode plate 60 is in a wound state.

In another modification, the width of each segment group may be designed to constitute at least one winding turn of the electrode assembly.

In still another modification, the width and/or height and/or spacing pitch of segments 61 belonging to the same segment group may increase or decrease gradually and/or stepwise and/or irregularly within the group.

The groups 1 to 8 are only examples of the segment group. The number of groups, the number of segments 61 included in each group, and the width of the group may be preferably adjusted so that the segments 61 overlap in several layers to disperse the stress as much as possible and sufficiently secure the welding strength during the bending process of the uncoated portion 43.

In another modification, the height of the outer-circumferential uncoated portion B3 may be decreased gradually or stepwise.

In still another modification, the segment structure of the intermediate uncoated portion B2 is extendable to the outer-circumferential uncoated portion B3 (see dotted line). In this case, the outer-circumferential uncoated portion B3 may also include a plurality of segments, like the intermediate uncoated portion B2. In this case, the segments of the outer-circumferential uncoated portion B3 may have a width and/or a height and/or a spacing pitch greater than that of the intermediate uncoated portion B2. Optionally, the segment structure of the outer-circumferential uncoated portion B3 may be substantially the same as the segment group at the outermost portion of the intermediate uncoated portion B2.

In a specific embodiment, when the electrode plate 60 is used to manufacture an electrode assembly of a cylindrical cell having a form factor of 46800, the width d_{B1} of the core-side uncoated portion B1 may be 180 mm to 350 mm. The width of the group 1 may be 35% to 40% of the width of the core-side uncoated portion B1. The width of the group 2 may be 130% to 150% of the width of the group 1. The width of the group 3 may be 120% to 135% of the width of the group 2. The width of the group 4 may be 85% to 90% of the width of the group 3. The width of the group 5 may be 120% to 130% of the width of the group 4. The width of the group 6 may be 100% to 120% of the width of the group 5. The width of the group 7 may be 90% to 120% of the width of the group 6. The width of the group 8 may be 115% to 130% of the width of the group 7. The width d_{B3} of the outer-circumferential uncoated portion B3 may be 180 mm to 350 mm, similar to the width of the core-side uncoated portion B1.

The reason the width of the groups 1 to 8 does not show a constant increase or decrease pattern is that the segment width gradually increases from the group 1 to the group 8, but the number of segments included in the group is limited to an integer number. Accordingly, the number of segments may be reduced in a specific segment group. Therefore, the width of the group may show an irregular change pattern as in the above example from the core toward the outer circumference.

That is, when the widths in the winding direction of three segment groups consecutively adjacent to each other in the circumferential direction of the electrode assembly are W1, W2, and W3, respectively, a combination of segment groups with W3/W2 smaller than W2/W1 may be included.

In the specific example, the groups 4 to 6 correspond to this. The width ratio of the group 5 to the group 4 is 120% to 130%, and the width ratio of the group 6 to the group 5 is 100% to 120%, which is smaller than 120% to 130%.

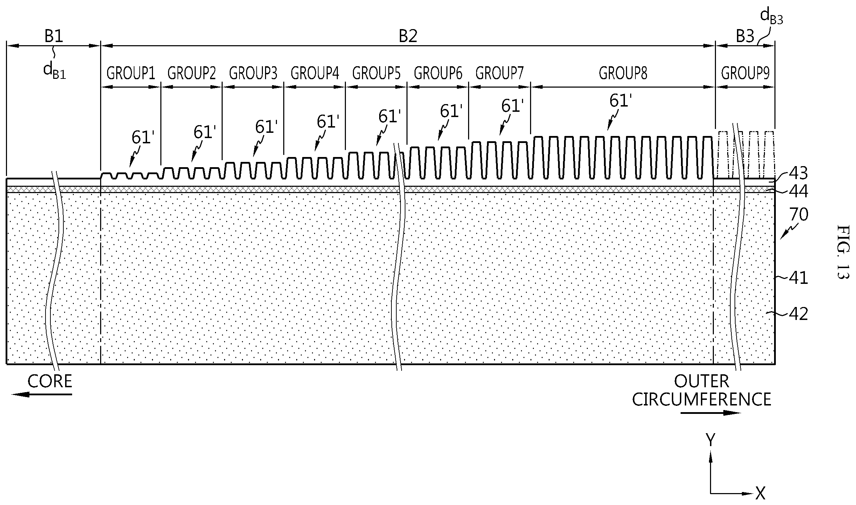

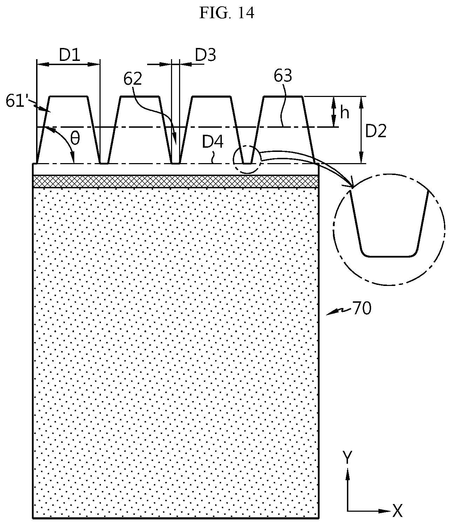

FIG. 13 is a plan view showing the structure of an electrode plate according to another embodiment of the present disclosure, and FIG. 14 is a diagram showing the definition of a width, a height, and a spacing pitch of a segment according to FIG. 13.

Referring to FIG. 13, the electrode plate 70 has substantially the same configuration as in FIG. 11, except that the shape of the segment 61' is changed from a quadrangle to a trapezoid.

FIG. 14 shows the definition of the width, height and spacing pitch of the trapezoidal segment 61'.

Referring to FIG. 14, the width D1, the height D2, and the spacing pitch D3 of segment 61' are designed to prevent tearing of the uncoated portion 43 near the bending point during bending of the uncoated portion 43 and to prevent abnormal deformation of the uncoated portion 43 while sufficiently increasing the number of overlapping layers of the uncoated portion 43 in order to sufficiently secure the welding strength.

Preferably, the width D1 of the segment 61' may be adjusted in the range of 1 mm to 8 mm. If D1 is less than 1 mm, when the segments 61' are bent toward the core, an area where the segments 61' do not overlap or an empty space (gap) may occur not to sufficiently secure the welding strength. On the other hand, if D1 exceeds 8 mm, there is a possibility that the uncoated portion 43 near the bending point may be torn by stress when the segments 61 are bent. In addition, the height of the segments 61' may be adjusted in the range of 2 mm to 10 mm. If D2 is less than 2 mm, when segment 61' is bent toward the core, an area where the segments 61' do not overlap or an empty space may occur not to sufficiently secure the welding strength. On the other hand, when D2 exceeds 10 mm, it is difficult to manufacture an electrode plate while uniformly maintaining the flatness of the uncoated portion 43 in the winding direction. In addition, the spacing pitch D3 of the segments 61' may be adjusted in the range of 0.05 mm to 1mm. If D3 is less than 0.05 mm, the uncoated portion 43 near the bending point D4 may be torn by stress when the segments 61' are bent. On the other hand, if D3 exceeds 1 mm, when segments 61' are bent, an area where the segments 61' do not overlap each other or an empty space may occur not to sufficiently secure the welding strength.

The cut portion 62 is interposed between two segments 61' adjacent to each other in the winding direction (X). The cut portion 62 corresponds to a space formed while the uncoated portion 43 is removed. Preferably, the corner portion of the lower end of the cut portion 62 may have a round shape (see the partially enlarged view). The round shape may relieve stress when the segments 61' are bent.

Referring to FIGS. 13 and 14, the trapezoidal lower inner angles θ of the plurality of segments 61' may increase from the core toward the outer circumference. As the radius of the electrode assembly 70 increases, the curvature increases. If the lower inner angle θ of the segment 61' increases as the radius of the electrode assembly increases, the stress generated in the radial and circumferential directions when the segment 61' is bent may be relieved. In addition, if the lower inner angle θ is increased, when the segment 61' is bent, the area overlapping with the segment 61' at an inner side and the number of overlapping layers also increase, so it is possible to secure uniform welding strength in the radial and circumferential directions and to form a flat bending surface.

In one example, when the electrode plate 70 is used to manufacture an electrode assembly of a cylindrical cell having a form factor of 46800, the diameter of the core (cavity) is 4 mm, and when the radius of the electrode assembly 70 increases from 4 mm to 22 mm, the inner angles of the segments 61' may be increased step by step in the range of 60 degrees to 85 degrees.

In one modification, the height of the outer-circumferential uncoated portion B3 may be gradually or stepwise reduced, similarly to the first and second embodiments. Also, the segmental structure of the intermediate uncoated portion B2 is extendable to the outer-circumferential uncoated portion B3 (refer to the dotted line). In this case, the outer-circumferential uncoated portion B3 may also include a plurality of segments, like the intermediate uncoated portion B2. In this case, the segments of the outer-circumferential uncoated portion B3 may have a width and/or a height and/or a spacing pitch greater than that of the intermediate uncoated portion B2. Optionally, the segment structure of the outer-circumferential uncoated portion B3 may be substantially the same as the segment group at the outermost side of the intermediate uncoated portion B2.

In a specific embodiment, when the electrode plate 70 is used to manufacture an electrode assembly of a cylindrical cell having a form factor of 46800, the width d_{B1} of the core-side uncoated portion B1 may be 180 mm to 350 mm. The width of the group 1 may be 35% to 40% of the width of the core-side uncoated portion B1. The width of the group 2 may be 130% to 150% of the width of the group 1. The width of the group 3 may be 120% to 135% of the width of the group 2. The width of the group 4 may be 85% to 90% of the width of the group 3. The width of the group 5 may be 120% to 130% of the width of the group 4. The width of the group 6 may be 100% to 120% of the width of the group 5. The width of the group 7 may be 90% to 120% of the width of the group 6. The width of the group 8 may be 115% to 130% of the width of the group 7. The width d_{B3} of the outer-circumferential uncoated portion B3 may be 180 mm to 350 mm, similar to the width of the core-side uncoated portion B1.

The reason that the widths of the groups 1 to 8 do not show a constant increase or decrease pattern is that the segment width gradually increases from the group 1 to the group 8, but the number of segments included in the group is limited to an integer number. Accordingly, the number of segments may be reduced in a specific segment group. Therefore, the width of the group may show an irregular change pattern as in the above example from the core toward the outer circumference.

That is, when the widths in the winding direction of three segment groups consecutively adjacent to each other in the circumferential direction of the electrode assembly are W1, W2, and W3, respectively, a combination of segment groups with W3/W2 smaller than W2/W1 may be included.

In the specific example, the groups 4 to 6 correspond to this. The width ratio of the group 5 to the group 4 is 120% to 130%, and the width ratio of the group 6 to the group 5 is 100% to 120%, which is smaller than 120% to 130%.

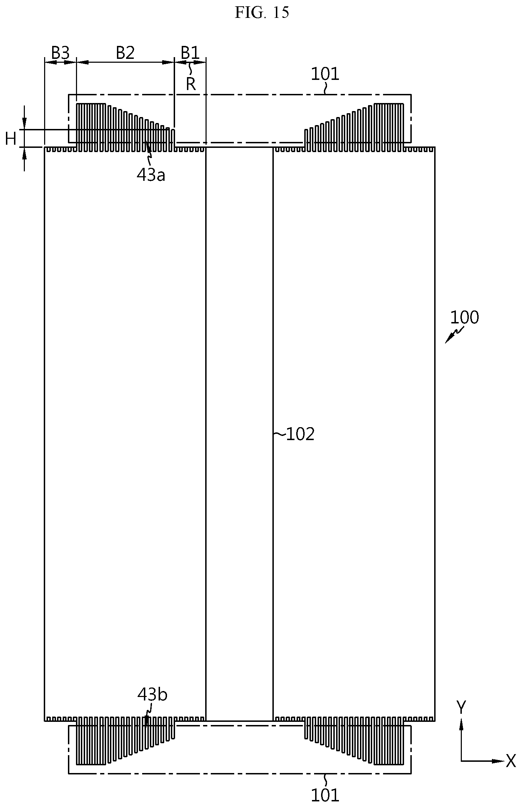

FIG. 15 is a cross-sectional view taken along a Y-axis direction (winding axis direction) of the electrode assembly according to an embodiment of the present disclosure.

Referring to FIG. 15, the uncoated portion 43a of the electrode plate includes a core-side uncoated portion B1 adjacent to the core of the electrode assembly 100, an outer-circumferential uncoated portion B3 adjacent to the outer circumferential surface of the electrode assembly 100, and an intermediate uncoated portion B2 interposed between the core-side uncoated portion B1 and the outer-circumferential uncoated portion B3.

The height of the core-side uncoated portion B1 is relatively smaller than the height of the intermediate uncoated portion B2. Also, in the intermediate uncoated portion B2, the bending length of the uncoated portion 43a located at the innermost side is equal to or smaller than the radial length R of the core-side uncoated portion B1. The bending length H corresponds to the height of the uncoated portion 43a based on the point (h in FIG. 12, h in FIG. 14) at which the uncoated portion 43a is bent.

Therefore, even if the intermediate uncoated portion B2 is bent, the bent portion does not block the cavity 102 of the core of the electrode assembly 100. If the cavity 102 is not blocked, there is no difficulty in the electrolyte injection process, and the electrolyte injection efficiency is improved. In addition, by inserting a welding jig through the cavity 102, the welding process between the current collection plate at the negative electrode (or the positive electrode) and the battery can (or the rivet terminal) may be easily performed.

The height of the outer-circumferential uncoated portion B3 is relatively smaller than the height of the intermediate uncoated portion B2. Accordingly, it is possible to prevent the beading portion and the outer-circumferential uncoated portion B3 from contacting each other while the beading portion of the battery can is pressed near the outer-circumferential uncoated portion B3.

In one modification, the height of the outer-circumferential uncoated portion B3 may be gradually or stepwise reduced, unlike that illustrated in FIG. 15. Also, in FIG. 15, the height of the intermediate uncoated portion B2 is the same as that of a part of the outer-circumferential portion, but the height of the intermediate uncoated portion B2 may increase gradually or stepwise from the boundary between the core-side uncoated portion B1 and the intermediate uncoated portion B2 to the boundary of the intermediate uncoated portion B2 and the outer-circumferential uncoated portion B3.

The lower uncoated portion 43b has the same structure as the upper uncoated portion 43a. In one modification, the lower uncoated portion 43b may have a conventional electrode plate structure or an electrode plate structure of other embodiments (modifications).

The end 101 of the upper uncoated portion 43a and the lower uncoated portion 43b may be bent from the outer circumference of the electrode assembly 100 toward the core. At this time, the core-side uncoated portion B1 and the outer-circumferential uncoated portion B3 are not substantially bent.

When the intermediate uncoated portion B2 includes a plurality of segments, the bending stress is relieved, and thus it is possible to prevent the uncoated portion 43a near the bending point from being torn or abnormally deformed. In addition, when the width and/or height and/or spacing pitch of the segments is adjusted according to the numerical range of the above-described embodiment, the segments are overlapped in several layers to sufficiently secure the welding strength while being bent toward the core, and an empty hole (gap) is not formed in the bending surface (surface as viewed from the Y-axis).

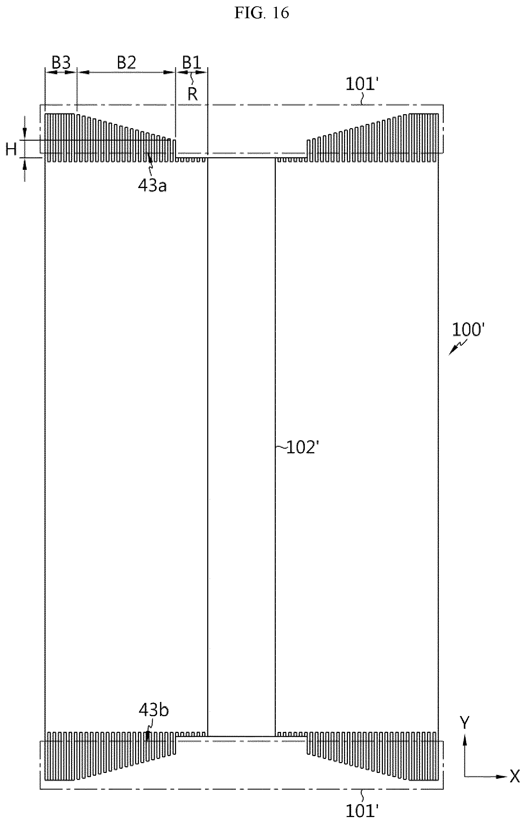

FIG. 16 is a cross-sectional view taken along the Y-axis direction (winding axis direction) of an electrode assembly according to another embodiment of the present disclosure.

Referring to FIG. 16, the electrode assembly 100' has substantially the same configuration as the electrode assembly 100 of FIG. 15, except that the height of the outer-circumferential uncoated portion B3 is substantially the same as the height of the outermost side of the intermediate uncoated portion B2. The outer-circumferential uncoated portion B3 may include a plurality of segments.

In the electrode assembly 100' , the height of the core-side uncoated portion B1 is relatively smaller than the height of the intermediate uncoated portion B2. Also, in the intermediate uncoated portion B2, the bending length H of the uncoated portion located at the innermost side is equal to or smaller than the radial length R of the core-side uncoated portion B1.

Therefore, even if the intermediate uncoated portion B2 is bent, the bent portion does not block the cavity 102' of the core of the electrode assembly 100' . If the cavity 102' is not blocked, there is no difficulty in the electrolyte injection process and the electrolyte injection efficiency is improved. In addition, by inserting a welding jig through the cavity 102' , the welding process between the current collecting plate at the negative electrode (or the positive electrode) and the battery can (or the rivet terminal) may be easily performed.

In one modification, the structure in which the height of the intermediate uncoated portion B2 is gradually or stepwise increased from the core toward the outer circumference may be extended to the outer-circumferential uncoated portion B3. In this case, the height of the uncoated portion 43a may be increased gradually or stepwise from the boundary between the core-side uncoated portion B1 and the intermediate uncoated portion B2 to the surface of the outermost side of the electrode assembly 100' .

The lower uncoated portion 43b has the same structure as the upper uncoated portion 43a. In one modification, the lower uncoated portion 43b may have a conventional electrode plate structure or an electrode plate structure of other embodiments (modifications).

The end 101' of the upper uncoated portion 43a and the lower uncoated portion 43b may be bent from the outer circumference of the electrode assembly 100' toward the core. At this time, the core-side uncoated portion B1 is not substantially bent.

When the intermediate uncoated portion B2 and the outer-circumferential uncoated portion B3 include a plurality of segments, the bending stress is relieved to prevent the uncoated portions 43a and 43b near the bending point from being torn or abnormally deformed. In addition, when the width and/or height and/or spacing pitch of the segments is adjusted according to the numerical range of the above-described embodiment, the segments are overlapped in several layers so as to sufficiently secure the welding strength while being bent toward the core, and an empty space (gap) is not formed in the bending surface (surface as viewed from the Y-axis).

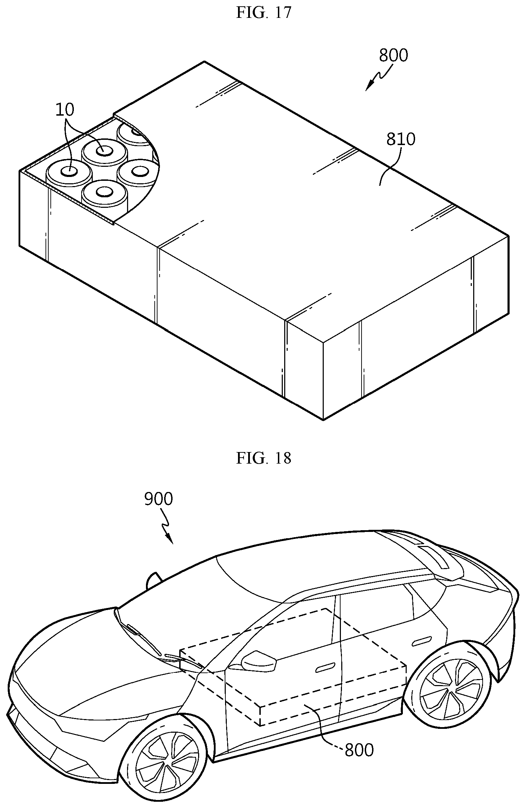

FIG. 17 is a diagram schematically showing the configuration of a battery pack according to an embodiment of the present disclosure.

Referring to FIG. 17, a battery pack 800 according to an embodiment of the present disclosure includes an assembly to which cylindrical battery cells 10 are electrically connected, and a pack housing 810 for accommodating the same. The cylindrical battery cell 10 is a battery cell according to the above-described embodiment. In the drawings, parts such as a bus bar, a cooling unit, and an external terminal for electrical connection of the cylindrical battery cells 10 are omitted for convenience of illustration.

The battery pack 800 may be mounted on a vehicle 900. The vehicle 900 may be, for example, an electric vehicle, a hybrid vehicle, or a plug-in hybrid vehicle. The vehicle 900 includes a four-wheeled vehicle or a two-wheeled vehicle.

FIG. 18 is a diagram for explaining a vehicle including the battery pack of FIG. 17.

Referring to FIG. 18, the vehicle 900 according to an embodiment of the present disclosure includes the battery pack 800 according to an embodiment of the present disclosure. The vehicle 900 operates by receiving power from the battery pack 800 according to an embodiment of the present disclosure.

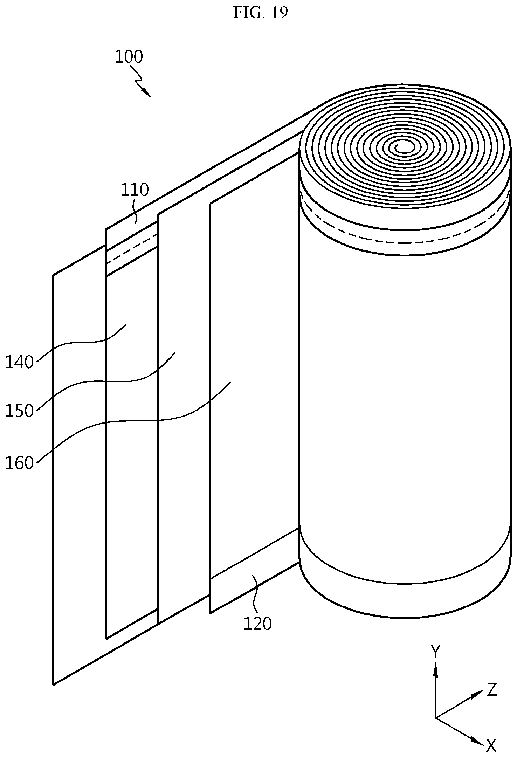

FIGS. 19 to 25 are diagrams illustrating a process of manufacturing a cylindrical battery cell according to an embodiment of the present disclosure.

A method for manufacturing a cylindrical battery cell according to an embodiment of the present disclosure will be described. However, the content common to the cylindrical battery cell according to an embodiment of the present disclosure as described above is replaced with the above description.

First, referring to FIG. 19, the electrode assembly 100 is prepared. The electrode assembly 100 is a jelly-roll type having a structure in which a first electrode plate 140 and a second electrode plate 160 having a sheet shape and a separator 150 interposed therebetween are wound in one direction. The first electrode plate 140 includes a first uncoated portion 110 coated with an active material layer at a long side end, and the first uncoated portion 110 and the second uncoated portion 120 are exposed to the outside of the separator while forming a plurality of winding turns based on the center of the electrode assembly 100 so as to be used as an electrode tab by itself.

Next, the current collection plate 300 is coupled to the first uncoated portion 110 of the electrode assembly 100.

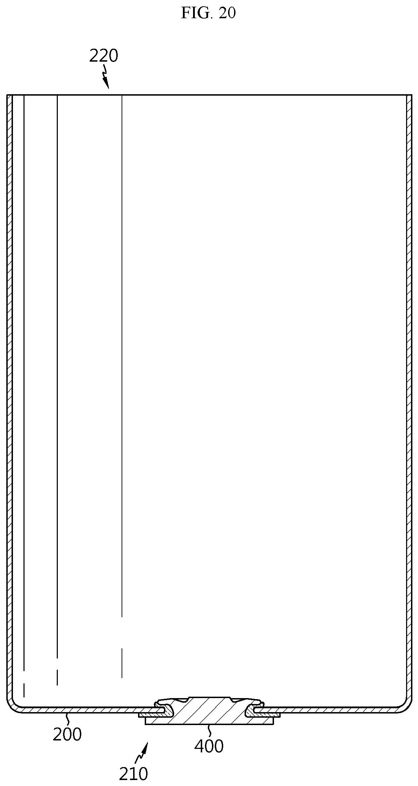

Next, referring to FIG. 20, a battery can 200 having an open portion 220 in which the electrode assembly 100 is accommodated and a partial closed portion 210 opposite to the open portion 220 and electrically connected to the second electrode plate 160 is prepared.

Next, a cell terminal 400 is coupled to the battery can 200 by a riveting process through the perforated hole 211 of the closed portion 210 of the battery can 200.

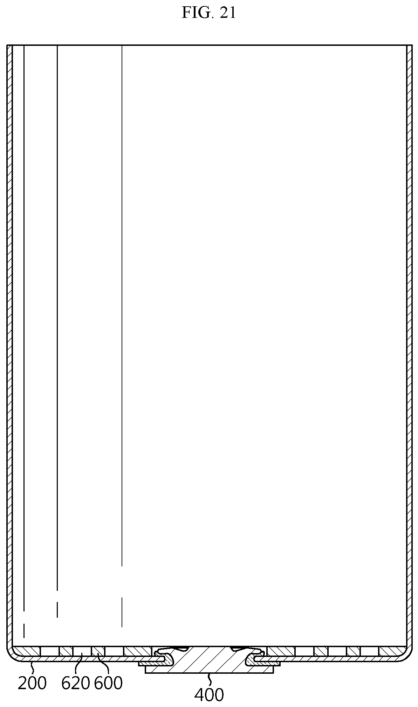

Next, referring to FIG. 21, the insulator 600 is coupled to the inner surface of the closed portion 210 of the battery can 200 in a state in which the battery can 200 is disposed so that the cell terminal 400 is positioned at the lower portion thereof. In one aspect, at least one protrusion 610 is formed on the outer circumference of the insulator 600, and the insulator 600 may be coupled to the battery can 200 by fitting. Preferably, the protrusion 610 may be provided in plurality, and the plurality of protrusions 610 may be formed at a preset interval on the outer circumference of the insulator 600, and may be compressed through fitting. In another aspect, a thermal fusion layer may be formed on a surface of the insulator 600 opposite to the inner surface of the closed portion 210 of the battery can 200, and the insulator 600 may be fixed to the battery can 200 by thermal fusion. In another aspect, an adhesion layer may be formed on the upper surface of the insulator 600 in contact with the battery can 200, and the insulator 600 may be fixed to the battery can 200 by adhesion. In another aspect, the insulator 600 may be fixed to the battery can 200 by a double-sided adhesive tape.

Preferably, an electrolyte may be injected in a state in which the battery can 200 stands up so that the cell terminal 400 faces in the direction of gravity. At least one through hole 620 is provided in the upper surface of the insulator 600 that is connected from the outer circumference of the insulator 600, and the electrolyte can may move into the electrode assembly 100 through the through hole 620. Preferably, the through hole 620 may be formed in plurality, and the plurality of through holes 620 may be spaced apart from each other at a preset interval. Preferably, the plurality of through holes 620 may be arranged on one straight line from the center portion of the insulator 600 toward the outer circumference of the insulator 600. Preferably, the plurality of through holes 620 may be arranged in each of a plurality of straight lines radially arranged from the center portion of the insulator 600 toward the outer circumference of the insulator 600.

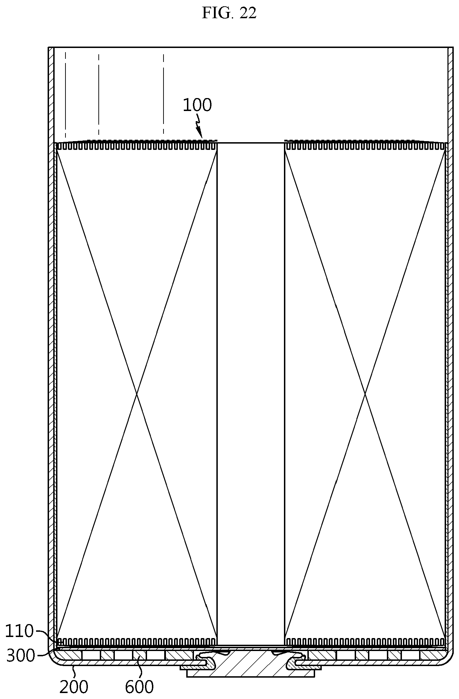

Next, referring to FIG. 22, the electrode assembly 100 is inserted into the battery can 200, and the insulator 600 is interposed between the battery can 200 and the current collection plate 300.

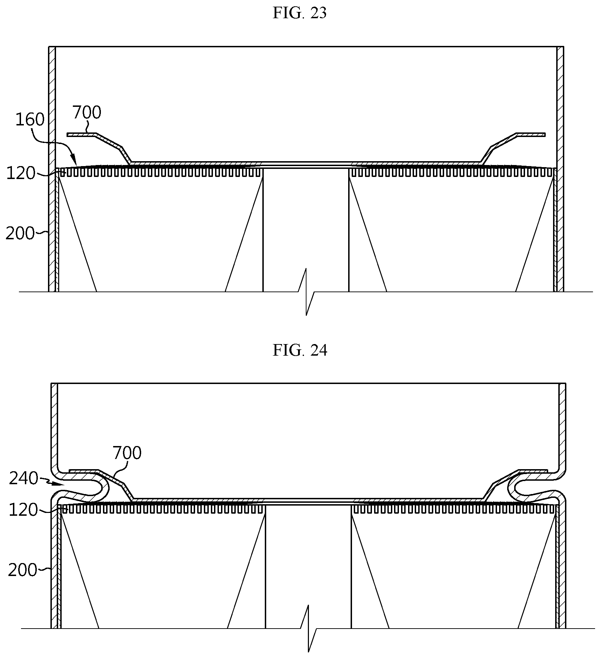

Next, referring to FIG. 23, the lower current collection plate 700 is coupled to the second uncoated portion 120 of the second electrode plate 160 by welding. Depending on the design of the process, the lower current collection plate 700 may be welded before the electrode assembly 100 is inserted into the battery can 200. The detailed description of the second electrode plate 160 and the lower current collection plate 700 is replaced with the above description.

Next, referring to FIG. 24, a beading portion 240 is formed in the battery can 200. The edge of the lower current collection plate 700 is welded while seated on the flat surface adjacent to the crimping portion 250 of the beading portion 240. A detailed description of the beading portion 240 is replaced with the above description.

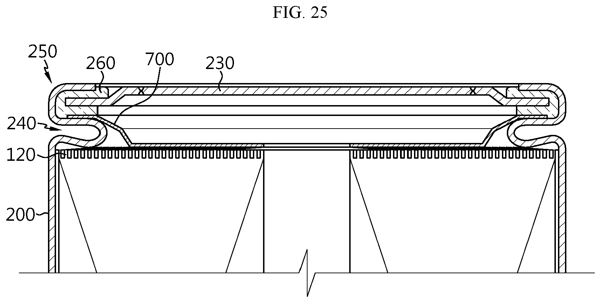

Next, referring to FIG. 25, a crimping portion 250 is formed on the battery can 200. When the crimping part 250 is formed, the edge of the cap plate 230 is supported on the beading portion 240 via the sealing gasket 260, and as the upper end of the battery can 200 is bent inward, the crimping portion 250 compresses the sealing gasket 260 to fix the cap plate 230. A detailed description of the crimping portion 250 is replaced with the above description.

According to the above-described manufacturing method, since the insulator is fixed to the battery can and does not move, the insulator may be coupled to the jelly-roll type electrode assembly at the correct position when the jelly-roll type electrode assembly is inserted into the battery can later, and thus it is possible to improve the insulation and prevent the occurrence of defects.

## Claims

1. A cylindrical battery cell (10), comprising:
a jelly-roll type electrode assembly (100) in which a first electrode plate and a second electrode plate (160) having a sheet shape and a separator interposed therebetween are wound in one direction;
a battery can (200) having an open portion (220) in which the electrode assembly (100) is accommodated and a partial closed portion (210) opposite to the open portion (220) and electrically connected to the second electrode plate (160);
a current collection plate (300) electrically connected to the first electrode plate;
a cell terminal (400) connected to the current collection plate (300) through a perforated hole (211) of the closed portion (210) of the battery can (200); and
an insulator (600) interposed between the battery can (200) and the current collection plate (300),
wherein at least one protrusion (610) is provided on an outer circumference of the insulator (600) so that the insulator (600) is coupled to the battery can (200) by interference-fitting when the electrode assembly (100) is accommodated in the battery can (200).

2. The cylindrical battery cell (10) according to claim 1,
wherein the first electrode plate of the electrode assembly (100) includes a first uncoated portion (110) not coated with an active material layer (42) at a long side end thereof, and the first uncoated portion (110) is exposed to the outside of the separator while forming a plurality of winding turns based on a center of the electrode assembly (100) so as to be used as an electrode tab by itself and electrically connected to the current collection plate (300).

3. The cylindrical battery cell (10) according to claim 1,
wherein the insulator (600) has a shape corresponding to a cross-sectional shape of the jelly-roll type electrode assembly (100).

4. The cylindrical battery cell (10) according to claim 1,
wherein the protrusion (610) is provided in plurality, and
wherein the plurality of protrusions (610) are provided at a preset interval on the outer circumference of the insulator (600).

5. The cylindrical battery cell (10) according to claim 4,
wherein the protrusions (610) are spaced apart from each other at the same interval on the outer circumference of the insulator (600).

6. The cylindrical battery cell (10) according to claim 1,
wherein a thermal fusion layer is formed on a surface of the insulator (600) facing an inner surface of the closed portion (210) of the battery can (200) so that the insulator (600) is fixed to the battery can (200) by thermal fusion when the electrode assembly (100) is accommodated in the battery can (200).

7. The cylindrical battery cell (10) according to claim 1,
wherein an adhesion layer is formed on an upper surface of the insulator (600) in contact with the battery can (200) so that the insulator (600) is fixed to the battery can (200) by adhesion when the electrode assembly (100) is accommodated in the battery can (200).

8. The cylindrical battery cell (10) according to claim 1,
wherein the insulator (600) is fixed to the battery can (200) by a double-sided adhesive tape.

9. The cylindrical battery cell (10) according to claim 1,
wherein at least one through hole (620) is formed in an upper surface of the insulator (600) connected from an outer circumference of the insulator (600) so that an electrolyte moves therethrough.

10. The cylindrical battery cell (10) according to claim 9,
wherein the through hole (620) is provided in plurality, and
wherein the plurality of through holes (620) are spaced apart from each other at a preset interval.

11. The cylindrical battery cell (10) according to claim 10,
wherein the plurality of through holes (620) are arranged on one straight line formed from a center portion of the insulator (600) toward the outer circumference of the insulator (600).

12. The cylindrical battery cell (10) according to claim 10,
wherein the plurality of through holes (620) are arranged on each of a plurality of straight lines radially arranged from a center portion of the insulator (600) toward the outer circumference of the insulator (600).

13. The cylindrical battery cell (10) according to claim 10,
wherein the arrangement interval of the plurality of through holes (620) increases or decreases along the radial direction.

14. The cylindrical battery cell (10) according to claim 9,
wherein a diameter of the through hole (620) is 1.0 mm to 3.0 mm.

15. The cylindrical battery cell (10) according to claim 1,
wherein a distance from a center of the insulator (600) to an end of the protrusion (610) is greater than a radius of the electrode assembly (100).

16. The cylindrical battery cell (10) according to claim 1,
wherein a distance from a center of the insulator (600) to an end of the protrusion (610) is greater than an inner diameter of the battery can (200).

17. The cylindrical battery cell (10) according to claim 1,
wherein an edge of the insulator (600) has a cross-sectional shape complementary to a cross-sectional shape of a corner of the closed portion (210) of the battery can (200).

18. The cylindrical battery cell (10) according to claim 1,
wherein the insulator (600) has a thickness corresponding to a distance between an inner surface of the closed portion (210) of the battery can (200) and the current collection plate (300).

19. The cylindrical battery cell (10) according to claim 18,
wherein the insulator (600) has a thickness of 0.8 mm or more and 1.6 mm or less.

20. The cylindrical battery cell (10) according to claim 1,
wherein an upper portion of the insulator (600) is in contact with an inner surface of the closed portion (210) of the battery can (200), and
wherein a lower portion of the insulator (600) is in contact with an upper surface of the current collection plate (300).

21. The cylindrical battery cell (10) according to claim 1,
wherein the insulator (600) includes an insulating polymer material.

22. The cylindrical battery cell (10) according to claim 21,
wherein the insulator (600) is made of polyethylene terephthalate (PET), polybutylene terephthalate (PBT) or polypropylene (PP).

23. The cylindrical battery cell (10) according to claim 1,
wherein the insulator (600) is made of a material having elasticity.

24. The cylindrical battery cell (10) according to claim 1,
wherein the insulator (600) has a center hole formed in a center portion thereof and having a preset diameter, and the center hole exposes a lower portion of the cell terminal (400).

25. The cylindrical battery cell (10) according to claim 1,
wherein an insulating tape (500) is attached to an outer circumference of the electrode assembly (100) at least to a point corresponding to an edge of the insulator (600).

26. The cylindrical battery cell (10) according to claim 2,
wherein at least a partial region of the first uncoated portion (110) is divided into a plurality of segments along a winding direction of the electrode assembly (100).

27. The cylindrical battery cell (10) according to claim 26,
wherein the plurality of segments are bent along a radial direction of the electrode assembly (100).

28. The cylindrical battery cell (10) according to claim 26,
wherein the plurality of segments are overlapped in several layers along a radial direction of the electrode assembly (100).

29. The cylindrical battery cell (10) according to claim 1, further comprising:
a cap plate (230) configured to seal the open portion (220) of the battery can (200).

30. The cylindrical battery cell (10) according to claim 29, further comprising:
a sealing gasket (260) interposed between an edge of the cap plate (230) and the open portion (220) of the battery can (200),
wherein the battery can (200) includes a beading portion (240) formed in a region adjacent to the open portion (220) and press-fitted into the battery can (200), and
wherein the battery can (200) includes a crimping portion (250) extended and bent into the battery can (200) to wrap and fix the edge of the cap plate (230) together with the sealing gasket (260).

31. The cylindrical battery cell (10) according to claim 30,
wherein the crimping portion (250) is formed in a lower portion of the battery can (200) based on an arrangement state of the battery can (200).

32. The cylindrical battery cell (10) according to claim 29,
wherein the cap plate (230) includes a vent notch (231) that is ruptured when a pressure inside the battery can (200) exceeds a threshold.

33. The cylindrical battery cell (10) according to claim 32,
wherein the vent notch (231) is formed on both surfaces of the cap plate (230) and formed in at least one pattern among a continuous circular pattern, a discontinuous circular pattern and a straight line pattern on the surface of the cap plate (230).

34. The cylindrical battery cell (10) according to claim 32,
wherein the vent notch (231) is formed in a lower portion of the battery can (200) based on an arrangement state of the battery can (200), and gas inside the battery can (200) is discharged through the lower portion of the battery can (200) when the vent notch (231) is ruptured.

35. The cylindrical battery cell (10) according to claim 25,
wherein the insulating tape (500) includes a folding portion with a width of 3 mm to 10 mm.

36. The cylindrical battery cell (10) according to claim 25,
wherein the insulating tape (500) includes a polyimide-based resin layer.

37. A vehicle, comprising at least one cylindrical battery cell (10) according to any one of claims 1 to 36.

38. A method for manufacturing a cylindrical battery cell (10), comprising:
(a) preparing a jelly-roll type electrode assembly (100) in which a first electrode plate and a second electrode plate (160) having a sheet shape and a separator interposed therebetween are wound in one direction;
(b) coupling a current collection plate (300) to a first uncoated portion (110) of the electrode assembly (100);
(c) preparing a battery can (200) having an open portion (220) in which the electrode assembly (100) is accommodated and a partial closed portion (210) opposite to the open portion (220) and electrically connected to the second electrode plate (160);
(d) coupling a cell terminal (400) through a perforated hole (211) of the closed portion (210) of the battery can (200);
(e) coupling an insulator (600) to an inner surface of the closed portion (210) of the battery can (200); and
(f) inserting the electrode assembly (100) into the battery can (200) so that the insulator (600) is interposed between the battery can (200) and the current collection plate (300),
wherein at least one protrusion (610) is provided on an outer circumference of the insulator (600), and the step (e) includes a step of coupling the insulator (600) to the battery can (200) by interference-fitting.

39. The method for manufacturing a cylindrical battery cell (10) according to claim 38,
wherein in the step (a), the first electrode plate of the electrode assembly (100) includes a first uncoated portion (110) not coated with an active material layer (42) at a long side end thereof, and the first uncoated portion (110) is exposed to the outside of the separator while forming a plurality of winding turns based on a center of the electrode assembly (100) so as to be used as an electrode tab by itself and electrically connected to the current collection plate (300).

40. The method for manufacturing a cylindrical battery cell (10) according to claim 38,
wherein the protrusion (610) is provided in plurality, and the plurality of protrusions (610) are provided at a preset interval on the outer circumference of the insulator (600), and wherein in the step (e), the protrusion (610) is compressed by the interference-fitting.

41. The method for manufacturing a cylindrical battery cell (10) according to claim 38,
wherein a thermal fusion layer is formed on a surface of the insulator (600) facing an inner surface of the closed portion (210) of the battery can (200), and the step (e) includes a step of fixing the insulator (600) to the battery can (200) by thermal fusion.

42. The method for manufacturing a cylindrical battery cell (10) according to claim 38,
wherein an adhesion layer is formed on an upper surface of the insulator (600) in contact with the battery can (200), and the step (e) includes a step of fixing the insulator (600) to the battery can (200) by adhesion.

43. The method for manufacturing a cylindrical battery cell (10) according to claim 38,
wherein the step (e) includes a step of fixing the insulator (600) to the battery can (200) by a double-sided adhesive tape.

44. The method for manufacturing a cylindrical battery cell (10) according to claim 38, further comprising:
(g) injecting an electrolyte in a state in which the battery can (200) stands up so that the cell terminal (400) faces in the direction of gravity.

45. The method for manufacturing a cylindrical battery cell (10) according to claim 44,
wherein at least one through hole (620) is formed in an upper surface of the insulator (600) connected from an outer circumference of the insulator (600), and
wherein in the step (g), the electrolyte moves into the electrode assembly (100) through the through hole (620).

46. The method for manufacturing a cylindrical battery cell (10) according to claim 45
wherein the through hole (620) is formed in plurality, and the plurality of through holes (620) are spaced apart from each other at a preset interval.

47. The method for manufacturing a cylindrical battery cell (10) according to claim 46,
wherein the plurality of through holes (620) are arranged on one straight line formed from a center portion of the insulator (600) toward the outer circumference of the insulator (600).

48. The method for manufacturing a cylindrical battery cell (10) according to claim 46,
wherein the plurality of through holes (620) are arranged on each of a plurality of straight lines radially arranged from a center portion of the insulator (600) toward the outer circumference of the insulator (600).

## Patentansprüche

1. Zylindrische Batteriezelle (10), umfassend:
eine Jelly-Roll-Elektrodenanordnung (100), in der eine erste folienförmige Elektrodenplatte und eine zweite folienförmige Elektrodenplatte (160) und ein dazwischen angeordneter Separator in einer Richtung gewickelt sind;
ein Batteriegehäuse (200) mit einer Öffnung (220), in der die Elektrodenanordnung (100) untergebracht ist, und einem teilweise geschlossenen Abschnitt (210), der Öffnung (220) gegenüberliegt und elektrisch mit der zweiten Elektrodenplatte (160) verbunden ist;
eine Stromsammelplatte (300), die elektrisch mit der ersten Elektrodenplatte verbunden ist;
einen Zellenanschluss (400), der mit der Stromsammelplatte (300) durch ein Durchgangsloch (211) des geschlossenen Abschnitts (210) des Batteriegehäuses (200) verbunden ist; und
einen Isolator (600), der zwischen dem Batteriegehäuse (200) und der Stromsammelplatte (300) angeordnet ist,
wobei mindestens ein Vorsprung (610) an einem Außenumfang des Isolators (600) vorgesehen ist, so dass der Isolator (600) durch Presspassung mit dem Batteriegehäuse (200) gekoppelt ist, wenn die Elektrodenanordnung (100) in dem Batteriegehäuse (200) untergebracht ist.

2. Zylindrische Batteriezelle (10) nach Anspruch 1,
wobei die erste Elektrodenplatte der Elektrodenanordnung (100) an einem Ende einer Längsseite einen ersten unbeschichteten Bereich (110) aufweist, der nicht mit einer Aktivmaterialschicht (42) beschichtet ist, und der erste unbeschichtete Bereich (110) zur Außenseite des Separators freiliegt, während er eine Vielzahl von Wicklungswindungen basierend auf einer Mitte der Elektrodenanordnung (100) bildet, so dass er selbst als Elektrodenfahne verwendet wird und elektrisch mit der Stromsammelplatte (300) verbunden ist.

3. Zylindrische Batteriezelle (10) nach Anspruch 1,
wobei der Isolator (600) eine Form aufweist, die einer Querschnittsform der Jelly-Roll-Elektrodenanordnung (100) entspricht.

4. Zylindrische Batteriezelle (10) nach Anspruch 1,
wobei der Vorsprung (610) mehrfach vorgesehen ist, und
wobei die mehreren Vorsprünge (610) in einem voreingestellten Intervall an dem Außenumfang des Isolators (600) vorgesehen sind.

5. Zylindrische Batteriezelle (10) nach Anspruch 4,
wobei die Vorsprünge (610) in dem gleichen Intervall an dem Außenumfang des Isolators (600) voneinander beabstandet sind.

6. Zylindrische Batteriezelle (10) nach Anspruch 1,
wobei eine thermische verschweißbare Schicht auf einer Oberfläche des Isolators (600) ausgebildet ist, die einer Innenfläche des geschlossenen Abschnitts (210) des Batteriegehäuses (200) zugewandt ist, so dass der Isolator (600) durch thermisches Verschweißen an dem Batteriegehäuse (200) befestigt ist, wenn die Elektrodenanordnung (100) in dem Batteriegehäuse (200) untergebracht ist.

7. Zylindrische Batteriezelle (10) nach Anspruch 1,
wobei eine Haftschicht auf einer oberen Oberfläche des Isolators (600) in Kontakt mit dem Batteriegehäuse (200) ausgebildet ist, so dass der Isolator (600) durch Haften an dem Batteriegehäuse (200) befestigt ist, wenn die Elektrodenanordnung (100) in dem Batteriegehäuse (200) untergebracht ist.

8. Zylindrische Batteriezelle (10) nach Anspruch 1,
wobei der Isolator (600) durch ein doppelseitiges Klebeband an dem Batteriegehäuse (200) befestigt ist.

9. Zylindrische Batteriezelle (10) nach Anspruch 1,
wobei mindestens ein Durchgangsloch (620) in einer oberen Oberfläche des Isolators (600) ausgebildet ist, das von einem Außenumfang des Isolators (600) aus so verbunden ist, dass sich ein Elektrolyt durch dieses hindurch bewegt.

10. Zylindrische Batteriezelle (10) nach Anspruch 9,
wobei mehrere Durchgangslöcher (620) vorgesehen sind, und
wobei die mehreren Durchgangslöcher (620) in einem voreingestellten Intervall voneinander beabstandet sind.

11. Zylindrische Batteriezelle (10) nach Anspruch 10,
wobei die mehreren Durchgangslöcher (620) auf einer geraden Linie angeordnet sind, die von einem Mittelabschnitt des Isolators (600) zu dem Außenumfang des Isolators (600) hin ausgebildet ist.

12. Zylindrische Batteriezelle (10) nach Anspruch 10,
wobei die mehreren Durchgangslöcher (620) auf jeder von mehreren geraden Linien angeordnet sind, die radial von einem Mittelabschnitt des Isolators (600) zu dem Außenumfang des Isolators (600) hin angeordnet sind.

13. Zylindrische Batteriezelle (10) nach Anspruch 10,
wobei das Anordnungsintervall der mehreren Durchgangslöcher (620) entlang der radialen Richtung zunimmt oder abnimmt.

14. Zylindrische Batteriezelle (10) nach Anspruch 9,
wobei ein Durchmesser des Durchgangslochs (620) 1,0 mm bis 3,0 mm beträgt.

15. Zylindrische Batteriezelle (10) nach Anspruch 1,
wobei ein Abstand von einer Mitte des Isolators (600) zu einem Ende des Vorsprungs (610) größer als ein Radius der Elektrodenanordnung (100) ist.

16. Zylindrische Batteriezelle (10) nach Anspruch 1,
wobei ein Abstand von einer Mitte des Isolators (600) zu einem Ende des Vorsprungs (610) größer als ein Innendurchmesser des Batteriegehäuses (200) ist.

17. Zylindrische Batteriezelle (10) nach Anspruch 1,
wobei eine Kante des Isolators (600) eine Querschnittsform aufweist, die komplementär zu einer Querschnittsform einer Ecke des geschlossenen Abschnitts (210) des Batteriegehäuses (200) ist.

18. Zylindrische Batteriezelle (10) nach Anspruch 1,
wobei der Isolator (600) eine Dicke aufweist, die einem Abstand zwischen einer Innenfläche des geschlossenen Abschnitts (210) des Batteriegehäuses (200) und der Stromsammelplatte (300) entspricht.

19. Zylindrische Batteriezelle (10) nach Anspruch 18,
wobei der Isolator (600) eine Dicke von 0,8 mm oder mehr und 1,6 mm oder weniger aufweist.

20. Zylindrische Batteriezelle (10) nach Anspruch 1,
wobei ein oberer Abschnitt des Isolators (600) in Kontakt mit einer Innenfläche des geschlossenen Abschnitts (210) des Batteriegehäuses (200) ist, und
wobei ein unterer Abschnitt des Isolators (600) in Kontakt mit einer oberen Oberfläche der Stromsammelplatte (300) ist.

21. Zylindrische Batteriezelle (10) nach Anspruch 1,
wobei der Isolator (600) ein isolierendes Polymermaterial aufweist.

22. Zylindrische Batteriezelle (10) nach Anspruch 21,
wobei der Isolator (600) aus Polyethylenterephthalat (PET), Polybutylenterephthalat (PBT) oder Polypropylen (PP) hergestellt ist.

23. Zylindrische Batteriezelle (10) nach Anspruch 1,
wobei der Isolator (600) aus einem elastischen Material hergestellt ist.

24. Zylindrische Batteriezelle (10) nach Anspruch 1,
wobei der Isolator (600) ein Mittelloch aufweist, das in einem Mittelabschnitt davon ausgebildet ist und einen voreingestellten Durchmesser aufweist, und das Mittelloch einen unteren Abschnitt des Zellenanschlusses (400) freilegt.

25. Zylindrische Batteriezelle (10) nach Anspruch 1,
wobei ein isolierendes Band (500) an einem Außenumfang der Elektrodenanordnung (100) mindestens an einem Punkt befestigt ist, der einer Kante des Isolators (600) entspricht.

26. Zylindrische Batteriezelle (10) nach Anspruch 2,
wobei mindestens ein Teilbereich des ersten unbeschichteten Abschnitts (110) entlang einer Wicklungsrichtung der Elektrodenanordnung (100) in mehrere Segmente unterteilt ist.

27. Zylindrische Batteriezelle (10) nach Anspruch 26,
wobei die mehreren Segmente entlang einer radialen Richtung der Elektrodenanordnung (100) gebogen sind.

28. Zylindrische Batteriezelle (10) nach Anspruch 26,
wobei sich die mehreren Segmente in mehreren Schichten entlang einer radialen Richtung der Elektrodenanordnung (100) überlappen.

29. Zylindrische Batteriezelle (10) nach Anspruch 1, ferner umfassend:
eine Abdeckplatte (230), die konfiguriert ist, um die Öffnung (220) des Batteriegehäuses (200) abzudichten.

30. Zylindrische Batteriezelle (10) nach Anspruch 29, ferner umfassend:
eine Dichtung (260), die zwischen einer Kante der Abdeckplatte (230) und der Öffnung (220) des Batteriegehäuses (200) angeordnet ist,
wobei das Batteriegehäuse (200) einen Sickenabschnitt (240) aufweist, der in einem Bereich neben der Öffnung (220) ausgebildet ist und in das Batteriegehäuse (200) eingepresst ist, und
wobei das Batteriegehäuse (200) einen Crimpabschnitt (250) aufweist, der sich in das Batteriegehäuse (200) erstreckt und gebogen ist, um die Kante der Abdeckplatte (230) zusammen mit der Dichtung (260) zu umhüllen und zu fixieren.

31. Zylindrische Batteriezelle (10) nach Anspruch 30,
wobei der Crimpabschnitt (250) in einem unteren Abschnitt des Batteriegehäuses (200) basierend auf einem Anordnungszustand des Batteriegehäuses (200) ausgebildet ist.

32. Zylindrische Batteriezelle (10) nach Anspruch 29,
wobei die Abdeckplatte (230) eine Entlüftungskerbe (231) aufweist, die aufgebrochen wird, wenn ein Druck im Inneren des Batteriegehäuses (200) einen Schwellenwert überschreitet.

33. Zylindrische Batteriezelle (10) nach Anspruch 32,
wobei die Entlüftungskerbe (231) auf beiden Oberflächen der Abdeckplatte (230) ausgebildet ist und in mindestens einem Muster aus einem kontinuierlichen kreisförmigen Muster, einem diskontinuierlichen kreisförmigen Muster und einem geraden Linienmuster auf der Oberfläche der Abdeckplatte (230) ausgebildet ist.

34. Zylindrische Batteriezelle (10) nach Anspruch 32,
wobei die Entlüftungskerbe (231) in einem unteren Abschnitt des Batteriegehäuses (200) basierend auf einem Anordnungszustand des Batteriegehäuses (200) ausgebildet ist und Gas im Inneren des Batteriegehäuses (200) durch den unteren Abschnitt des Batteriegehäuses (200) abgegeben wird, wenn die Entlüftungskerbe (231) aufgebrochen wird.

35. Zylindrische Batteriezelle (10) nach Anspruch 25,
wobei das isolierende Band (500) einen Faltabschnitt mit einer Breite von 3 mm bis 10 mm aufweist.

36. Zylindrische Batteriezelle (10) nach Anspruch 25,
wobei das isolierende Band (500) eine Harzschicht auf Polyimidbasis aufweist.

37. Fahrzeug, umfassend mindestens eine zylindrische Batteriezelle (10) nach einem der Ansprüche 1 bis 36.

38. Verfahren zur Herstellung einer zylindrischen Batteriezelle (10), umfassend:
(a) Herstellen einer Jelly-Roll-Elektrodenanordnung (100), in der eine erste folienförmige Elektrodenplatte und eine zweite folienförmige Elektrodenplatte (160) und ein dazwischen angeordneter Separator in einer Richtung gewickelt sind;
(b) Koppeln einer Stromsammelplatte (300) mit einem ersten unbeschichteten Abschnitt (110) der Elektrodenanordnung (100);
(c) Herstellen eines Batteriegehäuses (200) mit einer Öffnung (220), in der die Elektrodenanordnung (100) untergebracht ist, und einem teilweise geschlossenen Abschnitt (210), der Öffnung (220) gegenüberliegt und elektrisch mit der zweiten Elektrodenplatte (160) verbunden ist;
(d) Koppeln eines Zellenanschlusses (400) durch ein Durchgangsloch (211) des geschlossenen Abschnitts (210) des Batteriegehäuses (200);
(e) Koppeln eines Isolators (600) mit einer Innenfläche des geschlossenen Abschnitts (210) des Batteriegehäuses (200); und
(f) Einsetzen der Elektrodenanordnung (100) in das Batteriegehäuse (200), so dass der Isolator (600) zwischen dem Batteriegehäuse (200) und der Stromsammelplatte (300) angeordnet ist,
wobei mindestens ein Vorsprung (610) an einem Außenumfang des Isolators (600) vorgesehen ist und der Schritt (e) einen Schritt des Koppelns des Isolators (600) mit dem Batteriegehäuse (200) durch Presspassung aufweist.

39. Verfahren zur Herstellung einer zylindrischen Batteriezelle (10) nach Anspruch 38,
wobei im Schritt (a) die erste Elektrodenplatte der Elektrodenanordnung (100) an einem Ende einer Längsseite einen ersten unbeschichteten Bereich (110) aufweist, der nicht mit einer Aktivmaterialschicht (42) beschichtet ist, und der erste unbeschichtete Bereich (110) zur Außenseite des Separators freiliegt, während er eine Vielzahl von Wicklungswindungen basierend auf einer Mitte der Elektrodenanordnung (100) bildet, so dass er selbst als Elektrodenfahne verwendet wird und elektrisch mit der Stromsammelplatte (300) verbunden ist.

40. Verfahren zur Herstellung einer zylindrischen Batteriezelle (10) nach Anspruch 38,
wobei der Vorsprung (610) mehrfach vorgesehen ist und die mehreren Vorsprünge (610) in einem voreingestellten Intervall an dem Außenumfang des Isolators (600) vorgesehen sind, und
wobei im Schritt (e) der Vorsprung (610) durch die Presspassung zusammengedrückt wird.

41. Verfahren zur Herstellung einer zylindrischen Batteriezelle (10) nach Anspruch 38,
wobei eine thermische verschweißbare Schicht auf einer Oberfläche des Isolators (600) ausgebildet ist, die einer Innenfläche des geschlossenen Abschnitts (210) des Batteriegehäuses (200) zugewandt ist, und der Schritt (e) einen Schritt des Befestigens des Isolators (600) an dem Batteriegehäuse (200) durch thermisches Verschweißen aufweist.

42. Verfahren zur Herstellung einer zylindrischen Batteriezelle (10) nach Anspruch 38,
wobei eine Haftschicht auf einer oberen Oberfläche des Isolators (600) in Kontakt mit dem Batteriegehäuse (200) ausgebildet ist und der Schritt (e) einen Schritt des Befestigens des Isolators (600) an dem Batteriegehäuse (200) durch Haften aufweist.

43. Verfahren zur Herstellung einer zylindrischen Batteriezelle (10) nach Anspruch 38,
wobei der Schritt (e) einen Schritt des Befestigens des Isolators (600) an dem Batteriegehäuse (200) durch ein doppelseitiges Klebeband aufweist.

44. Verfahren zur Herstellung einer zylindrischen Batteriezelle (10) nach Anspruch 38, ferner umfassend:
(g) Einspritzen eines Elektrolyts in einem Zustand, in dem das Batteriegehäuse (200) aufrecht steht, so dass der Zellenanschluss (400) in Richtung der Schwerkraft weist.

45. Verfahren zur Herstellung einer zylindrischen Batteriezelle (10) nach Anspruch 44,
wobei mindestens ein Durchgangsloch (620) in einer oberen Oberfläche des Isolators (600) ausgebildet ist, das von einem Außenumfang des Isolators (600) aus verbunden ist, und
wobei sich im Schritt (g) der Elektrolyt durch das Durchgangsloch (620) in die Elektrodenanordnung (100) hinein bewegt.

46. Verfahren zur Herstellung einer zylindrischen Batteriezelle (10) nach Anspruch 45,
wobei mehrere Durchgangslöcher (620) ausgebildet sind und die mehreren Durchgangslöcher (620) in einem voreingestellten Intervall voneinander beabstandet sind.

47. Verfahren zur Herstellung einer zylindrischen Batteriezelle (10) nach Anspruch 46,
wobei die mehreren Durchgangslöcher (620) auf einer geraden Linie angeordnet sind, die von einem Mittelabschnitt des Isolators (600) zu dem Außenumfang des Isolators (600) hin ausgebildet ist.

48. Verfahren zur Herstellung einer zylindrischen Batteriezelle (10) nach Anspruch 46,
wobei die mehreren Durchgangslöcher (620) auf jeder von mehreren geraden Linien angeordnet sind, die radial von einem Mittelabschnitt des Isolators (600) zu dem Außenumfang des Isolators (600) hin angeordnet sind.

## Revendications

1. Cellule de batterie cylindrique (10) comprenant :
un ensemble d'électrodes (100) du type Jelly Roll, dans lequel une première plaque d'électrode et une deuxième plaque d'électrode (160) en forme de feuille, et un séparateur intercalé entre elles, sont enroulés dans une direction ;
un boîtier de batterie (200) possédant une partie ouverte (220) dans laquelle est logée l'ensemble d'électrodes (100), et une partie partiellement fermée (210) située face à la partie ouverte (220) et connectée électriquement à la deuxième plaque d'électrode (160) ;
une plaque collectrice de courant (300) connectée électriquement à la première plaque d'électrode ;
une borne de cellule (400) connectée à la plaque collectrice de courant (300) à travers un orifice perforé (211) de la partie fermée (210) du boîtier de la batterie (200) ; et
un isolateur (600) intercalé entre le boîtier de la batterie (200) et la plaque collectrice de courant (300),
au moins une saillie (610) étant agencée sur une circonférence extérieure de l'isolateur (600) afin que l'isolateur (600) soit couplé au boîtier de la batterie (200) par ajustement serré lorsque l'ensemble d'électrodes (100) est logé dans le boîtier de la batterie (200).

2. Cellule de batterie cylindrique (10) selon la revendication 1,
la première plaque d'électrodes de l'ensemble d'électrodes (100) comprenant une première partie non enrobée (110), non recouverte d'une couche de matière active (42) sur un bout côté long de celle-ci, et la première partie non enrobée (110) étant exposée à l'extérieur du séparateur tout en formant une pluralité de spires basées sur un centre de l'ensemble d'électrodes (100) afin d'être utilisée seule comme une languette d'électrode, et connectée électriquement à la plaque collectrice de courant (300).

3. Cellule de batterie cylindrique (10) selon la revendication 1,
la forme de l'isolateur (600) correspondant à une forme transversale de l'ensemble d'électrodes (100) du type Jelly Roll.

4. Cellule de batterie cylindrique (10) selon la revendication 1,
une pluralité de saillies (610) étant agencées, et
la pluralité de saillies (610) étant agencées à un intervalle préétabli sur la circonférence extérieure de l'isolateur (600).

5. Cellule de batterie cylindrique (10) selon la revendication 4,
les saillies (610) étant espacées l'une de l'autre de façon équidistante sur la circonférence extérieure de l'isolateur (600).

6. Cellule de batterie cylindrique (10) selon la revendication 1,
une couche de fusion thermique étant formée sur une surface de l'isolateur (600) faisant face à une surface intérieure de la partie fermée (210) du boîtier de batterie (200) de sorte que l'isolateur (600) soit fixé sur le boîtier de batterie (200) par fusion thermique lorsque l'ensemble d'électrodes (100) est logé dans le boîtier de la batterie (200).

7. Cellule de batterie cylindrique (10) selon la revendication 1,
une couche d'adhérence étant formée sur une surface supérieure de l'isolateur (600) au contact du boîtier de la batterie (200) de sorte que l'isolateur (600) soit fixé sur le boîtier de batterie (200) par adhérence lorsque l'ensemble d'électrodes (100) est logé dans le boîtier de la batterie (200).

8. Cellule de batterie cylindrique (10) selon la revendication 1,
l'isolateur (600) étant fixé sur le boîtier de batterie (200) par un ruban adhésif double-face.

9. Cellule de batterie cylindrique (10) selon la revendication 1,
au moins un orifice traversant (620) étant formé dans une surface supérieure de l'isolateur (600) connecté depuis une circonférence extérieure de l'isolateur (600) afin qu'un électrolyte se déplace à travers.

10. Cellule de batterie cylindrique (10) selon la revendication 9,
l'orifice traversant (620) étant agencé de manière plurielle, et
la pluralité d'orifices traversants (620) étant espacés l'un de l'autre par un intervalle préétabli.

11. Cellule de batterie cylindrique (10) selon la revendication 10,
la pluralité d'orifices traversants (620) étant agencée sur une ligne droite formée d'une partie centrale de l'isolateur (600) vers la circonférence extérieure de l'isolateur (600).

12. Cellule de batterie cylindrique (10) selon la revendication 10,
la pluralité d'orifices traversants (620) étant agencée sur chacune d'une pluralité de lignes droites agencées radialement d'une partie centrale de l'isolateur (600) vers la circonférence extérieure de l'isolateur (600).

13. Cellule de batterie cylindrique (10) selon la revendication 10,
l'intervalle d'agencement de la pluralité d'orifices traversants (620) augmentant ou diminuant dans le sens radial.

14. Cellule de batterie cylindrique (10) selon la revendication 9,
un diamètre de l'orifice traversant (620) mesurant de 1,0 mm à 3,0 mm.

15. Cellule de batterie cylindrique (10) selon la revendication 1,
une distance d'un centre de l'isolateur (600) à un bout de la saillie (610) étant plus grande qu'un rayon de l'ensemble d'électrodes (100).

16. Cellule de batterie cylindrique (10) selon la revendication 1,
une distance d'un centre de l'isolateur (600) à un bout de la saillie (610) étant plus grande qu'un diamètre intérieur du boîtier de la batterie (200).

17. Cellule de batterie cylindrique (10) selon la revendication 1,
la forme transversale d'un bord de l'isolateur (600) étant complémentaire d'une forme transversale d'un coin de la partie fermée (210) du boîtier de la batterie (200).

18. Cellule de batterie cylindrique (10) selon la revendication 1,
l'épaisseur de l'isolateur (600) correspondant à une distance entre une surface intérieure de la partie fermée (210) du boîtier de la batterie (200) et la plaque collectrice de courant (300).

19. Cellule de batterie cylindrique (10) selon la revendication 18,
l'épaisseur de l'isolateur (600) mesurant 0,8 mm ou davantage et 1,6 mm ou moins.

20. Cellule de batterie cylindrique (10) selon la revendication 1,
une partie supérieure de l'isolateur (600) étant au contact d'une surface intérieure de la partie fermée (210) du boîtier de la batterie (200), et
une partie inférieure de l'isolateur (600) étant au contact d'une surface supérieure de la plaque collectrice de courant (300).

21. Cellule de batterie cylindrique (10) selon la revendication 1,
l'isolateur (600) comprenant un matériau polymère isolant.

22. Cellule de batterie cylindrique (10) selon la revendication 21,
l'isolateur (600) étant réalisé en téréphtalate de polyéthylène (PET), en téréphtalate de polybutylène (PBT), ou en polypropylène (PP).

23. Cellule de batterie cylindrique (10) selon la revendication 1,
l'isolateur (600) étant réalisé avec un matériau présentant une élasticité.

24. Cellule de batterie cylindrique (10) selon la revendication 1,
l'isolateur (600) possédant un orifice central formé dans une partie centrale de celui-ci, et dont le diamètre est préréglé, l'orifice central exposant une partie inférieure de la borne de cellule (400).

25. Cellule de batterie cylindrique (10) selon la revendication 1,
un ruban isolant (500) étant fixé sur une circonférence extérieure de l'ensemble d'électrodes (100) au moins sur un point correspondant à un bord de l'isolateur (600).

26. Cellule de batterie cylindrique (10) selon la revendication 2,
au moins une zone partielle de la partie non enrobée (110) étant divisée en une pluralité de segments dans un sens d'enroulement de l'ensemble d'électrodes (100).

27. Cellule de batterie cylindrique (10) selon la revendication 26,
la pluralité de segments étant cintrée dans le sens radial de l'ensemble d'électrodes (100).

28. Cellule de batterie cylindrique (10) selon la revendication 26,
la pluralité de segments étant chevauchée dans plusieurs couches dans le sens radial de l'ensemble d'électrodes (100).

29. Cellule de batterie cylindrique (10) selon la revendication 1, comprenant en outre :
une plaque de recouvrement (230) configurée pour sceller la partie ouverte (220) du boîtier de la batterie (200).

30. Cellule de batterie cylindrique (10) selon la revendication 29, comprenant en outre :
une garniture d'étanchéité (260) intercalée entre un bord de la plaque de recouvrement (230) et la partie ouverte (220) du boîtier de la batterie (200),
le boîtier de la batterie (200) comprenant une partie de moulure (240) formée dans une zone adjacente à la partie ouverte (220) et emmanchée à force dans le boîtier de la batterie (200), et
le boîtier de la batterie (200) comprenant une partie de sertissage (250) déployée et cintrée dans le boîtier de la batterie (200) pour envelopper et fixer le bord de la plaque de recouvrement (230) conjointement avec la garniture d'étanchéité (260).

31. Cellule de batterie cylindrique (10) selon la revendication 30,
la partie de sertissage (250) étant formée dans une partie inférieure du boîtier de la batterie (200) selon un état d'agencement du boîtier de la batterie (200).

32. Cellule de batterie cylindrique (10) selon la revendication 29,
la plaque de recouvrement (230) comprenant une encoche d'évacuation (231) qui se rompt lorsqu'une pression à l'intérieur du boîtier de la batterie (200) dépasse une valeur seuil.

33. Cellule de batterie cylindrique (10) selon la revendication 32,
l'encoche d'évacuation (231) étant formée sur les deux surfaces de la plaque de recouvrement (230) et dans au moins une configuration parmi une configuration circulaire continue, une configuration circulaire discontinue, et une configuration à ligne droite sur la surface de la plaque de recouvrement (230).

34. Cellule de batterie cylindrique (10) selon la revendication 32,
l'encoche d'évacuation (231) étant formée dans une partie inférieure du boîtier de la batterie (200) d'après un état d'agencement du boîtier de la batterie (200), et le gaz à l'intérieur du boîtier de la batterie (200) étant évacué à travers la partie inférieure du boîtier de la batterie (200) lors d'une rupture de l'encoche d'évacuation (231).

35. Cellule de batterie cylindrique (10) selon la revendication 25,
le ruban isolant (500) comprenant une partie pliante de 3 mm à 10 mm de large.

36. Cellule de batterie cylindrique (10) selon la revendication 25,
le ruban isolant (500) comprenant une couche de résine à base de polyimide.

37. Véhicule comprenant au moins une cellule de batterie cylindrique (10) selon une quelconque des revendications 1 à 36.

38. Procédé de fabrication d'une cellule de batterie cylindrique (10), comprenant :
(a) la préparation d'un ensemble d'électrodes (100) du type Jelly Roll dans lequel une première plaque d'électrode et une deuxième plaque d'électrode (160) en forme de feuille, et un séparateur intercalé entre elles, sont enroulés dans une direction ;
(b) le couplage d'une plaque collectrice de courant (300) à une première partie non enrobée (110) de l'ensemble d'électrodes (100) ;
(c) la préparation d'un boîtier de batterie (200) possédant une partie ouverte (220) dans laquelle est placée l'ensemble d'électrodes (100), et une partie partiellement fermée (210) située face à la partie ouverte (220) et connectée électriquement à la deuxième plaque d'électrode (160) ;
(d) le couplage d'une borne de cellule (400) à travers un orifice perforé (211) de la partie fermée (210) du boîtier de la batterie (200) ;
(e) le couplage d'un isolateur (600) à une surface intérieure de la partie fermée (210) du boîtier de la batterie (200) ; et
(f) l'insertion de l'ensemble d'électrodes (100) dans le boîtier de la batterie (200) de sorte que l'isolateur (600) soit intercalé entre le boîtier de la batterie (200) et la plaque collectrice de courant (300),
au moins une saillie (610) étant agencée sur une circonférence extérieure de l'isolateur (600), et l'étape (e) comprenant une étape de couplage de l'isolateur (600) au boîtier de la batterie (200) par emmanchement à force.

39. Procédé de fabrication d'une cellule de batterie cylindrique (10) selon la revendication 38,
dans lequel, à l'étape (a), la première plaque d'électrode de l'ensemble d'électrodes (100) comprenant une première partie non enrobée (110), non recouverte d'une couche de matière active (42) sur un bout côté long de celle-ci, et la première partie non enrobée (110) étant exposée à l'extérieur du séparateur tout en formant une pluralité de spires basées sur un centre de l'ensemble d'électrodes (100) afin d'être utilisée comme une languette d'électrode par elle-même et connectée électriquement à la plaque collectrice de courant (300).

40. Procédé de fabrication d'une cellule de batterie cylindrique (10) selon la revendication 38,
la saillie (610) étant agencée de façon plurielle, et la pluralité de saillies (610) étant agencées à un intervalle préétabli sur la circonférence extérieure de l'isolateur (600), et
à l'étape (e), la saillie (610) étant comprimée par ajustement serré.

41. Procédé de fabrication d'une cellule de batterie cylindrique (10) selon la revendication 38,
une couche de fusion thermique étant formée sur une surface de l'isolateur (600) faisant face à une surface intérieure de la partie fermée (210) du boîtier de batterie (200), et l'étape (e) comprenant une étape de fixation de l'isolateur (600) sur le boîtier de batterie (200) par fusion thermique.

42. Procédé de fabrication d'une cellule de batterie cylindrique (10) selon la revendication 38,
une couche d'adhérence étant formée sur une surface supérieure de l'isolateur (600) au contact du boîtier de la batterie (200) de sorte que l'isolateur (600) soit fixé sur le boîtier de batterie (200), et l'étape (e) comprenant une étape de fixation de l'isolateur (600) sur le boîtier de batterie (200) par adhérence.

43. Procédé de fabrication d'une cellule de batterie cylindrique (10) selon la revendication 38,
l'étape (e) comprenant une étape de fixation de l'isolateur (600) sur le boîtier de batterie (200) par un ruban adhésif double-face.

44. Procédé de fabrication d'une cellule de batterie cylindrique (10) selon la revendication 38, comprenant en outre :
(g) l'injection d'un électrolyte dans un état dans lequel le boîtier de la batterie (200) est droit, afin que la borne de la cellule (400) soit tournée dans le sens de la gravité.

45. Procédé de fabrication d'une cellule de batterie cylindrique (10) selon la revendication 44,
au moins un orifice traversant (620) étant formé dans une surface supérieure de l'isolateur (600) connectée depuis une circonférence extérieure de l'isolateur (600), et
à l'étape (g), l'électrolyte s'introduisant dans l'ensemble d'électrodes (100) à travers l'orifice traversant (620).

46. Procédé de fabrication d'une cellule de batterie cylindrique (10) selon la revendication 45,
l'orifice traversant (620) étant formé de manière plurielle, et la pluralité d'orifices traversants (620) étant espacés entre eux par un intervalle préréglé.

47. Procédé de fabrication d'une cellule de batterie cylindrique (10) selon la revendication 46,
la pluralité d'orifices traversants (620) étant agencée sur une ligne droite formée depuis une partie centrale de l'isolateur (600) vers la circonférence extérieure de l'isolateur (600).

48. Procédé de fabrication d'une cellule de batterie cylindrique (10) selon la revendication 46,
la pluralité d'orifices traversants (620) étant agencée sur chacune d'une pluralité de lignes droites agencées radialement depuis une partie centrale de l'isolateur (600) vers la circonférence extérieure de l'isolateur (600).
